(19) Europäisches Patentamt
European Patent Office
Office européen des brevets

(11) EP 4 534 613 A1

(12) EUROPEAN PATENT APPLICATION

(43) Date of publication:
**09.04.2025 Bulletin 2025/15**

(21) Application number: **24183310.2**

(22) Date of filing: **20.06.2024**

(51) International Patent Classification (IPC):
***C09D 5/00*** *(2006.01)*

(52) Cooperative Patent Classification (CPC):
**C09D 5/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.07.2023 JP 2023123817**
**09.02.2024 JP 2024019021**

(71) Applicant: **FUJIFILM Corporation**
**Tokyo 106-8620 (JP)**

(72) Inventors:
- **SEKINE, Shinichiro**
**c/o FUJIFILM Corporation, 577, Ushijima, Kaisei-machi, Ashigarakami-gun, Kanagawa, 258-8577 (JP)**
- **SUZUKI, Shota**
**c/o FUJIFILM Corporation, 577, Ushijima, Kaisei-machi, Ashigarakami-gun, Kanagawa, 258-8577 (JP)**
- **KODAMA, Kunihiko**
**c/o FUJIFILM Corporation, 577, Ushijima, Kaisei-machi, Ashigarakami-gun, Kanagawa, 258-8577 (JP)**

(74) Representative: **HGF**
**HGF Limited**
**1 City Walk**
**Leeds LS11 9DX (GB)**

# (54) ACTIVE ENERGY RAY-CURABLE INK JET INK, IMAGE RECORDING METHOD, AND MANUFACTURING METHOD OF LAMINATE

(57) Provided are an active energy ray-curable inkjet ink which is capable of recording an image having excellent adhesiveness to a base material containing a polymer including vinyl chloride as a constitutional unit, and the like.

Provided are an active energy ray-curable inkjet ink containing an acrylic resin which contains a constitutional unit A derived from a polymerizable compound A including at least one selected from the group consisting of a fluorinated hydrocarbon group, a polysiloxane group, and a hydrocarbon group having 12 or more carbon atoms, and contains a constitutional unit B derived from a polymerizable compound B having a polarity element of an HSP value of 4.8 $MPa^{1/2}$ or more, and a polymerizable monomer, in which a content of the constitutional unit A is 40% by mass or less with respect to a total amount of the acrylic resin, and a content of the constitutional unit B is 15% by mass or more with respect to the total amount of the acrylic resin; and applications thereof.

EP 4 534 613 A1

## Description

BACKGROUND OF THE INVENTION

1. Field of the Invention

The present disclosure relates to an active energy ray-curable ink jet ink, an image recording method, and a manufacturing method of a laminate.

2. Description of the Related Art

In the related art, various examinations have been conducted on image recording carried out using an ink.

For example, JP6861811B discloses a photocurable ink composition containing a resin which has an amine structure having an α-hydrogen atom and includes at least one selected from the group consisting of an alkylthio group, an alkylenethioalkylene group, and a mercapto group and at least one selected from the group consisting of a fluorinated hydrocarbon group, a polysiloxane group, and a hydrocarbon group having 12 or more carbon atoms, at least one of a monofunctional radically polymerizable monomer or a bifunctional radically polymerizable monomer, and a photopolymerization initiator, in which the resin includes a structural unit (1) having the amine structure having an α-hydrogen atom, a structural unit (2) including the at least one selected from the group consisting of an alkylthio group, an alkylene thioalkylene group, and a mercapto group, and a structural unit (3) including the at least one selected from the group consisting of a fluorinated hydrocarbon group, a polysiloxane group, and a hydrocarbon group having 12 or more carbon atoms, and a weight-average molecular weight of the resin is 5,000 to 30,000.

JP2012-092330A discloses an ink composition containing a polymer which has a urethane bond or a urea bond in a main chain structure and has a polymerizable group in a side chain, a polymerizable compound other than the polymer, and a polymerization initiator, in which the polymer has, at least at one terminal of the main chain structure, any one of a fluorine-substituted hydrocarbon group, a group including a siloxane structure, or a long-chain alkyl group.

JP2013-237834A discloses an actinic ray curable-type ink composition containing a monofunctional radically polymerizable monomer, a polyfunctional oligomer having a glass transition temperature of 20°C or lower and an acrylate value of 300 g/val or more, and a bifunctional radically polymerizable monomer having a viscosity of 15 mPa·s or less at 25°C, in which the monofunctional radically polymerizable monomer includes an N-vinyl compound and a compound represented by Formula (I), a content of the N-vinyl compound is 10% to 50% by mass with respect to the total amount of the ink composition, and a content of the monofunctional radically polymerizable monomer is 70% by mass or more with respect to the total amount of the ink composition.

JP2009-209353A discloses an ink composition containing a polymer having a siloxane structure and a polymerizable group in a side chain, a polymerizable compound, and a photoinitiator.

SUMMARY OF THE INVENTION

In a case where an image is recorded on a base material for image recording, containing a polymer (for example, polyvinyl chloride) including vinyl chloride as a constitutional unit, to obtain an image recorded material, a laminate may be manufactured by laminating a base material for lamination, containing the polymer including vinyl chloride as a constitutional unit, on the image in the image recorded material. In this case, it is required to improve adhesiveness between the base material for image recording and the image and adhesiveness between the image and the base material for lamination.

The present disclosure has been made in view of such circumstances, and an object to be achieved by one embodiment of the present disclosure is to provide an active energy ray-curable ink jet ink which is capable of recording an image having excellent adhesiveness to a base material containing a polymer including vinyl chloride as a constitutional unit.

An object to be achieved by another embodiment of the present disclosure is to provide an image recording method which is capable of recording an image having excellent adhesiveness to a base material containing a polymer including vinyl chloride as a constitutional unit.

An object to be achieved by still another embodiment of the present disclosure is to provide a manufacturing method of a laminate having excellent adhesiveness between a base material containing a polymer including vinyl chloride as a constitutional unit and an image.

The present disclosure includes the following aspects.

<1> An active energy ray-curable inkjet ink comprising:

an acrylic resin which contains a constitutional unit A derived from a polymerizable compound A including at least one selected from the group consisting of a fluorinated hydrocarbon group, a polysiloxane group, and a hydrocarbon group having 12 or more carbon atoms, and contains a constitutional unit B derived from a polymerizable compound B having a polarity element of an HSP value of 4.8 $MPa^{1/2}$ or more; and

a polymerizable monomer,

in which a content of the constitutional unit A is 40% by mass or less with respect to a total amount of the acrylic resin, and

a content of the constitutional unit B is 15% by mass or more with respect to the total amount of the acrylic resin.

<2> The active energy ray-curable ink jet ink according to <1>,
in which a glass transition temperature of the acrylic resin is 150°C or lower.
<3> The active energy ray-curable ink jet ink according to <1> or <2>,
in which the polymerizable compound A is a polymerizable compound including at least one selected from the group consisting of the fluorinated hydrocarbon group and the polysiloxane group.
<4> The active energy ray-curable inkjet ink according to any one of <1> to <3>,
in which a number-average molecular weight of the polymerizable compound A is 5,000 or less.
<5> The active energy ray-curable ink jet ink according to any one of <1> to <4>,
in which a mass ratio of the constitutional unit A to the constitutional unit B is 0.01 to 0.65.
<6> The active energy ray-curable ink jet ink according to any one of <1> to <5>,
in which a hydrogen bond element of the HSP value of the polymerizable compound B is 11.0 $MPa^{1/2}$ or less.
<7> The active energy ray-curable ink jet ink according to any one of <1> to <6>,
in which the polymerizable compound B contains a polymerizable compound B1 having a hydrogen bond element of the HSP value of 11.0 $MPa^{1/2}$ or less and a polymerizable compound B2 having a hydrogen bond element of the HSP value of more than 11.0 $MPa^{1/2}$.
<8> The active energy ray-curable ink jet ink according to <7>,
in which a mass ratio of a content of the polymerizable compound B1 to a content of the polymerizable compound B2 is 1 to 20.
<9> The active energy ray-curable ink jet ink according to any one of <1> to <8>,
in which the constitutional unit B is at least one constitutional unit selected from the group consisting of Formulae (1) to (5),

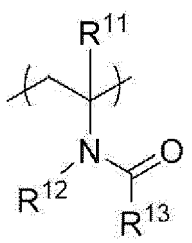
(1)

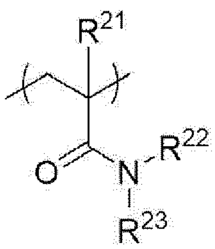
(2)

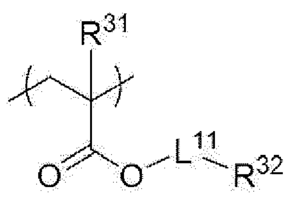
(3)

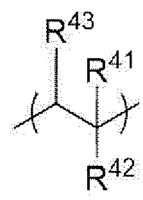
(4)

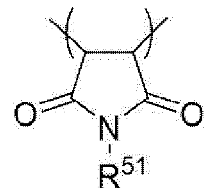
(5)

in Formula (1), $R^{11}$ represents a hydrogen atom or a hydrocarbon group, $R^{12}$ and $R^{13}$ each independently represent a hydrocarbon group which may include an oxygen atom, or a hydrogen atom, and $R^{12}$ and $R^{13}$ may be bonded to each other to form a ring,

in Formula (2), $R^{21}$ represents a hydrogen atom or a hydrocarbon group, $R^{22}$ and $R^{23}$ each independently represent a hydrocarbon group which may include an oxygen atom, or a hydrogen atom, and $R^{22}$ and $R^{23}$ may be bonded to each other to form a ring,

in Formula (3), $R^{31}$ represents a hydrogen atom or a hydrocarbon group, $L^{11}$ represents a single bond or a divalent linking group, and $R^{32}$ represents a hydrocarbon group including at least one selected from the group consisting of -O-, -S-, -C(=O)-, -NH-, and -N<,

in Formula (4), $R^{41}$ represents a hydrogen atom or a hydrocarbon group, $R^{42}$ and $R^{43}$ each independently represent a hydrogen atom, a cyano group, a hydrocarbon group having a carbonyl group, a phosphoric acid ester group, or a monovalent heterocyclic group, and $R^{42}$ and $R^{43}$ may be bonded to each other to form a ring,

in Formula (5), $R^{51}$ represents a hydrogen atom or a hydrocarbon group.

<10> The active energy ray-curable ink jet ink according to any one of <1> to <9>,

in which the polymerizable monomer contains a polymerizable monomer C which has a (meth)acryloyl group and has a solubility parameter of 16.5 $MPa^{1/2}$ to 21.3 $MPa^{1/2}$.

<11> The active energy ray-curable inkjet ink according to <10>, in which a molecular weight of the polymerizable monomer C is 215 or less.

<12> The active energy ray-curable ink jet ink according to any one of <1> to <11>,

in which the polymerizable monomer contains an N-vinyl compound.

<13> The active energy ray-curable ink jet ink according to any one of <1> to <12>,

in which a weighted average value of glass transition temperatures in a case where all polymerizable monomers contained in the active energy ray-curable ink jet ink are homopolymers is 0°C to 100°C.

<14> An image recording method comprising:

a step of applying the active energy ray-curable inkjet ink according to any one of <1> to <13> onto a base material for image recording, containing a polymer including vinyl chloride as a constitutional unit, by an ink jet recording method to record an image.

<15> A manufacturing method of a laminate, comprising:

a step of applying the active energy ray-curable inkjet ink according to any one of <1> to <13> onto a base material for image recording, containing a polymer including vinyl chloride as a constitutional unit, by an ink jet recording method to record an image; and

a step of disposing a base material for lamination, containing a polymer including vinyl chloride as a constitutional unit, on the image for lamination.

According to one embodiment of the present disclosure, there is provided an active energy ray-curable ink jet ink which is capable of recording an image having excellent adhesiveness to a base material containing a polymer including vinyl chloride as a constitutional unit, and the like.

According to another embodiment of the present disclosure, there is provided an image recording method which is capable of recording an image having excellent adhesiveness to a base material containing a polymer including vinyl chloride as a constitutional unit.

According to still another embodiment of the present disclosure, there is provided a manufacturing method of a laminate having excellent adhesiveness between a base material containing a polymer including vinyl chloride as a constitutional unit and an image.

DESCRIPTION OF THE PREFERRED EMBODIMENTS

Hereinafter, the active energy ray-curable ink jet ink, the image recording method, and the manufacturing method of a laminate according to the present disclosure will be described in detail.

In the present specification, the numerical ranges shown using "to" means ranges including the numerical values described before and after "to" as the minimum value and the maximum value.

In a numerical range described in a stepwise manner in the present specification, an upper limit value or a lower limit value described in a certain numerical range may be replaced with an upper limit value or a lower limit value in another numerical range described in a stepwise manner. In addition, in the numerical range described in the present specification, an upper limit value and a lower limit value described in a certain numerical range may be replaced with values shown in Examples.

In the present specification, in a case where a plurality of substances corresponding to each component in a composition is present, the amount of each component in the composition means the total amount of the plurality of substances present in the composition, unless otherwise specified.

In the present specification, a combination of two or more preferred aspects is a more preferred aspect.

In the present specification, the meaning of the term "step" includes not only an independent step but also a step whose intended purpose is achieved even in a case where the step is not clearly distinguished from other steps.

In the present specification, the term "image" denotes an entire film formed by applying an ink, and the term "image recording" denotes formation of an image (that is, the film).

In addition, the concept of "image" in the present specification also includes a solid image.

In the present specification, "(meth)acrylate" is a concept including both acrylate and methacrylate. In addition, "(meth)acryl" is a concept that includes both acryl and methacryl.

The active energy ray-curable ink jet ink (hereinafter, also simply referred to as "ink") according to the present disclosure contains an acrylic resin which contains a constitutional unit A derived from a polymerizable compound A including at least one selected from the group consisting of a fluorinated hydrocarbon group, a polysiloxane group, and a hydrocarbon group having 12 or more carbon atoms, and contains a constitutional unit B derived from a polymerizable compound B having a polarity element of an HSP value of 4.8 $MPa^{1/2}$ or more, and a polymerizable monomer, in which a

content of the constitutional unit A is 40% by mass or less with respect to a total amount of the acrylic resin, and a content of the constitutional unit B is 15% by mass or more with respect to the total amount of the acrylic resin.

With the ink according to the present disclosure, it is possible to record an image having excellent adhesiveness to a base material containing a polymer including vinyl chloride as a constitutional unit.

The reason why the above-described effect is exhibited is presumed as follows.

For example, in a case where the ink according to the present disclosure is applied onto a base material containing a polymer including vinyl chloride as a constitutional unit, and then irradiated with active energy ray, an image recorded material in which an ink film is formed on the base material as an image can be obtained. In a case where an ink film is formed, a colorant (for example, a pigment) which can be contained in the ink tends to be unevenly distributed on a surface of the ink film. The present inventors have found that, in a case where a base material for lamination, containing a polymer including vinyl chloride as a constitutional unit, is further laminated on the ink film, adhesiveness between the ink film and the base material for lamination is likely to be inhibited by the colorant unevenly distributed on the surface of the ink film.

On the other hand, in the ink according to the present disclosure, the acrylic resin contains the constitutional unit A and the constitutional unit B, the content of the constitutional unit A is 40% by mass or less with respect to the total amount of the acrylic resin, and the content of the constitutional unit B is 15% by mass or more with respect to the total amount of the acrylic resin. The constitutional unit A is a constitutional unit derived from the polymerizable compound A including at least one selected from the group consisting of a fluorinated hydrocarbon group, a polysiloxane group, and a hydrocarbon group having 12 or more carbon atoms. In a case where the constitutional unit A is contained, the acrylic resin is likely to be unevenly distributed at a gas-liquid interface of the ink. As a result, in a case where the ink is cured to form the ink film, the acrylic resin can exist on the surface of the ink film more than the colorant, and the adhesiveness between the ink film (that is, the image) and the base material for lamination can be improved.

Since the constitutional unit A does not have high affinity with the polymer including vinyl chloride as a constitutional unit, the content of the constitutional unit A is set to 40% by mass or less.

The vinyl chloride has a large polarity element of HSP value. Therefore, in a case where the acrylic resin contains 15% by mass or more of the constitutional unit B derived from a polymerizable compound B having a polarity element of an HSP value of 4.8 $MPa^{1/2}$ or more, the adhesiveness between the image and the base material for lamination is improved.

That is, the acrylic resin can be unevenly distributed on the surface of the ink film by the constitutional unit A, and the adhesiveness between the image and the base material for lamination is improved by the constitutional unit B having high affinity with the polymer including vinyl chloride as a constitutional unit.

JP6861811B, JP2012-092330A, JP2013-237834A, and JP2009-209353A do not disclose the ink containing the acrylic resin in which the content of the constitutional unit A is 40% by mass or less and the content of the constitutional unit B is 15% by mass or more.

Hereinafter, each component contained in the ink according to the embodiment of the present disclosure will be described.

## Active energy ray-curable ink jet ink

The ink according to the embodiment of the present disclosure is an active energy ray-curable inkjet ink. That is, the ink according to the embodiment of the present disclosure is cured by irradiation with an active energy ray. Examples of the active energy ray include $\gamma$-rays, $\beta$-rays, electron beams, ultraviolet rays, and visible rays. Among these, ultraviolet rays are preferable as the active energy ray. It is preferable that the ink according to the embodiment of the present disclosure is an ultraviolet curable-type inkjet ink.

## Acrylic resin

The ink according to the present disclosure contains at least one acrylic resin.

In the present disclosure, the acrylic resin means a resin containing a constitutional unit derived from a compound having a (meth)acryloyl group (for example, (meth)acrylic acid ester).

The acrylic resin contains a constitutional unit A derived from a polymerizable compound A including at least one selected from the group consisting of a fluorinated hydrocarbon group, a polysiloxane group, and a hydrocarbon group having 12 or more carbon atoms, and contains a constitutional unit B derived from a polymerizable compound B having a polarity element of an HSP value of 4.8 $MPa^{1/2}$ or more.

## Constitutional unit A

The acrylic resin contains the constitutional unit A derived from the polymerizable compound A including at least one selected from the group consisting of a fluorinated hydrocarbon group, a polysiloxane group, and a hydrocarbon group

having 12 or more carbon atoms. The acrylic resin may contain only one kind of the constitutional unit A, or two or more kinds of constitutional units A.

The content of the constitutional unit A is 40% by mass or less with respect to the total amount of the acrylic resin.

Since the acrylic resin contains the constitutional unit A, the content of the constitutional unit A is more than 0% by mass with respect to the total amount of the acrylic resin.

The fluorinated hydrocarbon group, the polysiloxane group, and the hydrocarbon group having 12 or more carbon atoms have low cohesive energy, and thus the acrylic resin containing these groups is likely to be unevenly distributed at the gas-liquid interface of the ink. As a result, in a case where the ink is cured to form the ink film, the acrylic resin can exist on the surface of the ink film more than a colorant (for example, a pigment) which can be contained in the ink, and the adhesiveness between the ink film (that is, the image) and the base material for lamination can be improved.

From the viewpoint of unevenly dispersing the acrylic resin on the surface of the ink film and improving blocking resistance, the content of the constitutional unit A is preferably 1% by mass or more, more preferably 3% by mass or more, and still more preferably 5% by mass or more.

On the other hand, from the viewpoint of improving the affinity with the base material for lamination and improving the blocking resistance, the content of the constitutional unit A is preferably 37% by mass or less, more preferably 32% by mass or less, and still more preferably 25% by mass or less.

The fluorinated hydrocarbon group means a hydrocarbon group substituted with at least one fluorine atom.

Examples of the fluorinated hydrocarbon group include a fluorinated alkyl group, a fluorinated alkenyl group, and a fluorinated aryl group.

As the fluorinated hydrocarbon group, a fluorinated alkyl group is preferable, and a perfluoroalkyl group is particularly preferable.

The number of fluorine atoms in the fluorinated hydrocarbon group is preferably 6 or more and more preferably 8 or more. The upper limit of the number of fluorine atoms in the fluorinated hydrocarbon group is not particularly limited, and examples thereof include 40.

The number of carbon atoms in the fluorinated hydrocarbon group is preferably 3 or more and more preferably 4 or more. The upper limit of the number of carbon atoms in the fluorinated hydrocarbon group is not particularly limited, and examples thereof include 20.

Examples of the hydrocarbon group having 12 or more carbon atoms include an alkyl group, an alkenyl group, an aryl group, an alkylaryl group, and an aralkyl group. As the hydrocarbon group having 12 or more carbon atoms, an alkyl group is particularly preferable.

The number of carbon atoms in the hydrocarbon group having 12 or more carbon atoms is preferably 14 or more and more preferably 16 or more.

The upper limit of the number of carbon atoms in the hydrocarbon group having 12 or more carbon atoms is not particularly limited, and examples thereof include 30.

The polysiloxane group means a divalent group including a repetition of an Si-O bond.

The constitutional unit A more preferably includes a monovalent group including a polysiloxane group.

Examples of the monovalent group including a polysiloxane group include the following group (P).

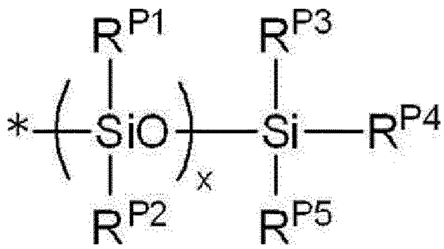

(P)

In the group (P), $R^{P1}$ and $R^{P2}$ each independently represent a hydrocarbon group having 1 to 6 carbon atoms or the following group (Z), $R^{P3}$ to $R^{P5}$ each independently represent a hydrocarbon group having 1 to 6 carbon atoms, x represents an integer of 1 to 100, and * represents a bonding position.

In a case where x is an integer of 2 or more, a plurality of $R^{P1}$'s may be the same or different from each other, and a plurality of $R^{P2}$'s may be the same or different from each other.

In the group (P), the number of Si-O bonds (that is, siloxane bonds) is 2 or more.

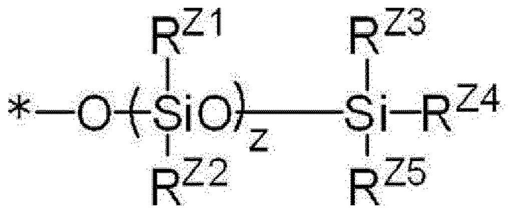

(Z)

In the group (Z), $R^{Z1}$ to $R^{Z5}$ each independently represent a hydrocarbon group having 1 to 6 carbon atoms, z represents an integer of 0 to 100, and * represents a bonding position.

In a case where z is an integer of 2 or more, a plurality of $R^{Z1}$'s may be the same or different from each other, and a plurality of $R^{Z2}$'s may be the same or different from each other.

x in the group (P) is preferably an integer of 1 to 50, more preferably an integer of 1 to 20, and particularly preferably an integer of 1 to 10.

In the group (P), as the hydrocarbon groups having 1 to 6 carbon atoms in $R^{P1}$ to $R^{P5}$, a methyl group, an ethyl group, an n-butyl group, or a phenyl group is preferable, a methyl group, an n-butyl group, or a phenyl group is more preferable, and a methyl group an n-butyl group is particularly preferable.

z in the group (Z) is preferably an integer of 0 to 50, more preferably an integer of 0 to 20, and particularly preferably an integer of 0 to 10.

In the group (Z), as the hydrocarbon groups having 1 to 6 carbon atoms in $R^{Z1}$ to $R^{Z5}$, a methyl group, an ethyl group, or a phenyl group is preferable, a methyl group or a phenyl group is more preferable, and a methyl group is particularly preferable.

Examples of the constitutional unit A include a constitutional unit derived from a vinyl monomer (for example, (meth)acrylic acid ester, (meth)acrylamide, and the like).

The constitutional unit A is preferably a constitutional unit derived from (meth)acrylic acid ester, and more preferably a constitutional unit represented by Formula (A1).

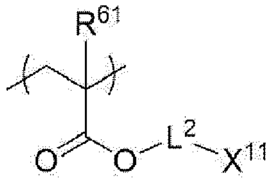

(A1)

In the constitutional unit (A1), $R^{61}$ represents a hydrogen atom or a methyl group, $L^2$ represents a single bond or a linking group, and $X^{11}$ represents a fluorinated hydrocarbon group, a monovalent group including a polysiloxane group, or a hydrocarbon group having 12 or more carbon atoms.

The preferred aspects of the fluorinated hydrocarbon group, the monovalent group including a polysiloxane group, and the hydrocarbon group having 12 or more carbon atoms in $X^{11}$ are as described above, respectively.

$R^{61}$ represents a hydrogen atom or a methyl group, and a methyl group is preferable.

As the linking group represented by $L^2$, a divalent hydrocarbon group having 1 to 11 carbon atoms (more preferably having 2 to 11 carbon atoms and still more preferably having 2 to 8 carbon atoms) is preferable.

The above-described divalent hydrocarbon group may have a substituent such as a hydroxy group and an alkoxy group.

Examples of the above-described divalent hydrocarbon group include an alkylene group, an alkenylene group, an arylene group, an alkylenearylene group, an alkylenearylenealkylene group, an alkylene carbonyloxyalkylene group, and an arylene carbonyloxyalkylene group.

As the above-described divalent hydrocarbon group, an alkylene group having 1 to 11 carbon atoms (more preferably having 1 to 6 carbon atoms) is particularly preferable.

Specific examples of the constitutional unit represented by Formula (A1) are as follows.

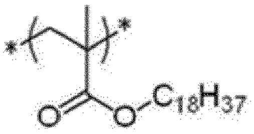
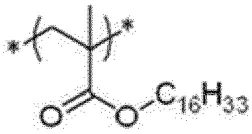
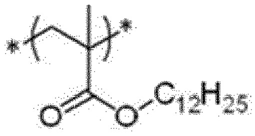

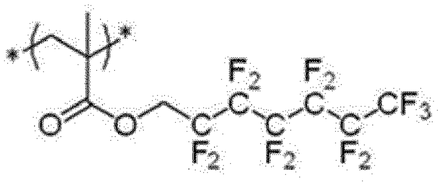
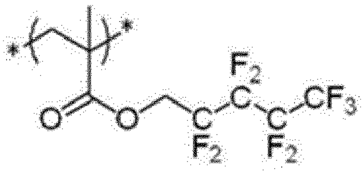
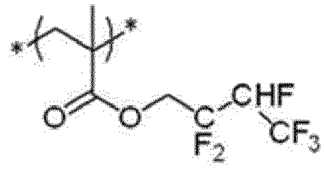

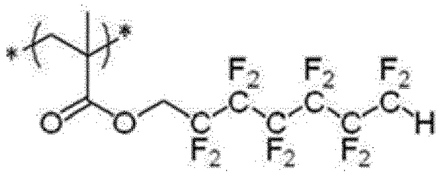
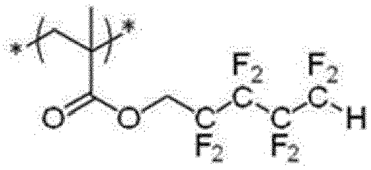

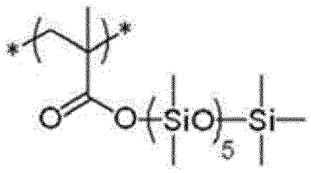
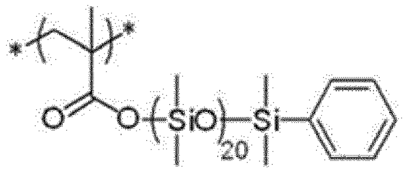

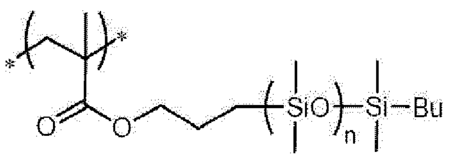

n=1~140

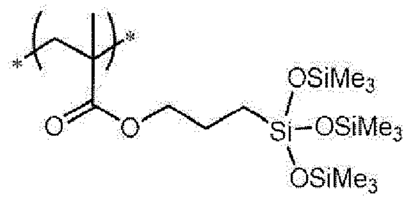

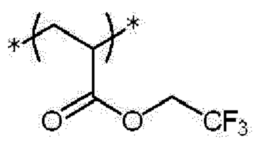
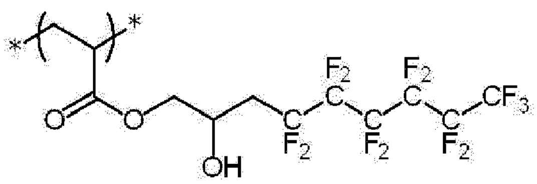
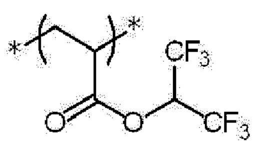

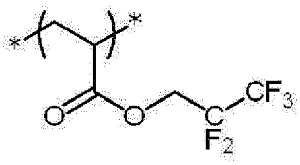
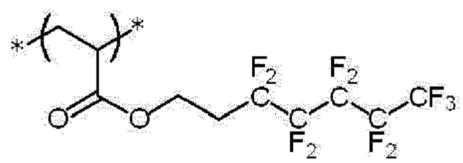

The constitutional unit A is a constitutional unit derived from the polymerizable compound A, and can be introduced into the acrylic resin by using the polymerizable compound A as a raw material.

The polymerizable compound A may be a commercially available product.

Examples of the commercially available product include X-22-174ASX, X-22-174BX, KF-2012, X-22-2426, and X-22-2404 (manufactured by Shin-Etsu Chemical Co., Ltd.); FM00711, FM-0721, FM-0725, and TM-0701T (manufactured by JNC Corporation); and VISCOAT 3F and VISCOAT 13F (manufactured by Osaka Organic Chemical Industry Ltd.).

Among these, from the viewpoint of further improving the adhesiveness to the base material for lamination, the polymerizable compound A is preferably a polymerizable compound including at least one selected from the group consisting of a fluorinated hydrocarbon group and a polysiloxane group.

In a case where a number-average molecular weight (Mn) of the polymerizable compound A is increased, the effect of unevenly dispersing the acrylic resin on the surface is enhanced, and peelability is enhanced. From the viewpoint of further improving the adhesiveness to the base material for lamination, the number-average molecular weight of the polymerizable compound A is preferably 5,000 or less and more preferably 3,000 or less. On the other hand, from the viewpoint of blocking resistance, the number-average molecular weight of the polymerizable compound A is preferably 400 or more and more preferably 700 or more.

In the present disclosure, the number-average molecular weight is measured by gel permeation chromatography (GPC). For example, HLC-8220GPC (manufactured by Tosoh Corporation) is used as GPC, three columns of TSKgel, SuperMultipore HZ-H (manufactured by Tosoh Corporation; 4.6 mmID $\times$ 15 cm) are used as a column, and tetrahydrofuran (THF) is used as an eluent. As the conditions, a sample concentration of 0.45% by mass, a flow rate of 0.35 ml/min, a sample injection amount of 10 $\mu$l, and a measurement temperature of 40°C are set, and a differential refractive index (RI) detector is used for detection. A calibration curve is obtained from, as a standard sample, eight samples of product names "TSK Standard polystyrene" manufactured by Tosoh Corporation: "F-40", "F-20", "F-4", "F-1", "A-5000", "A-2500", "A-1000", and "n-propylbenzene".

In a case where a molecular weight of the polymerizable compound A is 1,000 or less, the molecular weight is calculated from the type and the number of atoms constituting the polymerizable compound A.

Constitutional unit B

The acrylic resin contains a constitutional unit B derived from a polymerizable compound B having a polarity element of an HSP value of 4.8 $MPa^{1/2}$ or more. The acrylic resin may contain only one kind of the constitutional unit B, or two or more kinds of constitutional units B.

The content of the constitutional unit B is 15% by mass or more with respect to the total amount of the acrylic resin.

Since the acrylic resin contains the constitutional unit A in addition to the constitutional unit B, the content of the constitutional unit B is less than 100% by mass with respect to the total amount of the acrylic resin.

Since the vinyl chloride has a large polarity element of HSP value, in a case where the acrylic resin contains 15% by mass or more of the constitutional unit B derived from a polymerizable compound B having a polarity element of an HSP value of 4.8 $MPa^{1/2}$ or more, the adhesiveness between the image and the base material for lamination is improved.

From the above viewpoint, the content of the constitutional unit B is preferably 25% by mass or more, more preferably 40% by mass or more, still more preferably 55% by mass or more, and particularly preferably 70% by mass or more.

The SP value (Hildebrand solubility parameter: $\delta$) is a physical property value defined by a square root of a cohesive energy density, and is a numerical value indicating a dissolving behavior of a substance. The SP value is a parameter which takes polarity of a substance into consideration by dividing the SP value into three components of a dispersion element ($\delta D$), a polarity element ($\delta P$), and a hydrogen bonding element ($\delta H$), which is a Hansen solubility parameter (HSP value).

$\delta^2$ is represented by $\delta D^2 + \delta P^2 + \delta H^2$.

In the present disclosure, the dispersion element, the polarity element, and the hydrogen bonding element of the HSP value are calculated based on the structure of the compound using Hansen solubility parameter (HSP) software (product name "HSPiP 5th Edition").

From the viewpoint of further increasing the affinity with the base material for lamination and improving the adhesiveness to the base material for lamination, in the polymerizable compound B, the polarity element of the HSP value is preferably 5.0 $MPa^{1/2}$ or more, more preferably 5.3 $MPa^{1/2}$ or more, and still more preferably 5.6 $MPa^{1/2}$ or more.

The upper limit value of the polarity element of the HSP value is not particularly limited, but is, for example, 21.5 $MPa^{1/2}$.

In addition, from the viewpoint of further enhancing the affinity with the base material for lamination and improving the adhesiveness to the base material for lamination, in the polymerizable compound B, the hydrogen bond element of the HSP value is preferably 11.0 $MPa^{1/2}$ or less, more preferably 10.0 $MPa^{1/2}$ or less, still more preferably 8.6 $MPa^{1/2}$ or less, particularly preferably 8.0 $MPa^{1/2}$ or less, and most preferably 7.5 $MPa^{1/2}$ or less.

The lower limit value of the hydrogen bond element of the HSP value is not particularly limited, but is, for example,

3.0 $MPa^{1/2}$.

As described above, the acrylic resin may contain two or more kinds of the constitutional units B, and in a case where the acrylic resin contains two or more kinds of the constitutional units B, the acrylic resin is synthesized using two or more kinds of polymerizable compounds.

In a case where two or more kinds of polymerizable compound are used, it is preferable that at least one polymerizable compound B among the two or more kinds of polymerizable compounds satisfies the above-described preferred ranges of the polarity element and the hydrogen bond element of the HSP value.

Specifically, the "in the polymerizable compound B, the hydrogen bond element of the HSP value is 11.0 $MPa^{1/2}$ or less" means that a hydrogen bond element of the HSP value in at least one polymerizable compound B in the two or more kinds of polymerizable compounds is 11.0 $MPa^{1/2}$ or less.

From the viewpoint of further improving the blocking resistance, the acrylic resin preferably contains two or more kinds of the constitutional units B.

Specifically, it is preferable that the polymerizable compound B contains a polymerizable compound B1 having a hydrogen bond element of the HSP value of 11.0 $MPa^{1/2}$ or less and a polymerizable compound B2 having a hydrogen bond element of the HSP value of more than 11.0 $MPa^{1/2}$.

In a case where the acrylic resin contains the constitutional unit B1 derived from the polymerizable compound B1 and the constitutional unit B2 derived from the polymerizable compound B2, long-term blocking resistance is improved while maintaining the adhesiveness to the lamination base material.

From the viewpoint of further improving the adhesiveness to the lamination base material and the blocking resistance, a mass ratio of a content of the polymerizable compound B 1 to a content of the polymerizable compound B2 is preferably 1 to 20 and more preferably 2 to 17.

It is preferable that the constitutional unit B is at least one constitutional unit selected from the group consisting of Formulae (1) to (5).

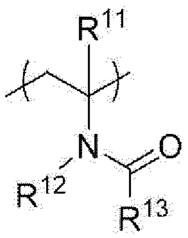
(1)

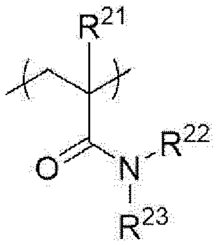
(2)

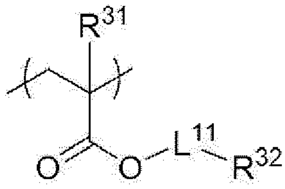
(3)

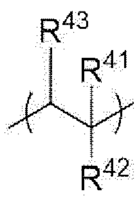
(4)

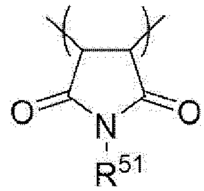
(5)

In Formula (1), $R^{11}$ represents a hydrogen atom or a hydrocarbon group, $R^{12}$ and $R^{13}$ each independently represent a hydrocarbon group which may include an oxygen atom, or a hydrogen atom, and $R^{12}$ and $R^{13}$ may be bonded to each other to form a ring.

In Formula (2), $R^{21}$ represents a hydrogen atom or a hydrocarbon group, $R^{22}$ and $R^{23}$ each independently represent a hydrocarbon group which may include an oxygen atom, or a hydrogen atom, and $R^{22}$ and $R^{23}$ may be bonded to each other to form a ring.

In Formula (3), $R^{31}$ represents a hydrogen atom or a hydrocarbon group, $L^{11}$ represents a single bond or a divalent linking group, and $R^{32}$ represents a hydrocarbon group including at least one selected from the group consisting of -O-, -S-, -C(=O)-, -NH-, and -N<.

In Formula (4), $R^{41}$ represents a hydrogen atom or a hydrocarbon group, $R^{42}$ and $R^{43}$ each independently represent a hydrogen atom, a cyano group, a hydrocarbon group having a carbonyl group, a phosphoric acid ester group, or a monovalent heterocyclic group, and $R^{42}$ and $R^{43}$ may be bonded to each other to form a ring.

In Formula (5), $R^{51}$ represents a hydrogen atom or a hydrocarbon group.

Formula (1)

In Formula (1), $R^{11}$ is preferably a hydrogen atom or a methyl group.

In Formula (1), the hydrocarbon group represented by $R^{12}$ and $R^{13}$ may be a linear hydrocarbon group, a branched hydrocarbon group, or a cyclic hydrocarbon group, but is preferably a linear hydrocarbon group.

The hydrocarbon group represented by $R^{12}$ and $R^{13}$ may be a saturated hydrocarbon group or an unsaturated hydrocarbon group, but is preferably a saturated hydrocarbon group.

That is, the hydrocarbon group represented by $R^{12}$ and $R^{13}$ is more preferably a linear alkyl group.

The number of carbon atoms in the hydrocarbon group represented by $R^{12}$ and $R^{13}$ is preferably 1 to 10.

Examples of the hydrocarbon group which may include an oxygen atom include a -O-monovalent hydrocarbon group, a -divalent hydrocarbon group-OH, a -divalent hydrocarbon group-O-monovalent hydrocarbon group, and a -divalent hydrocarbon group-C=(O)O-monovalent hydrocarbon group.

From the viewpoint of reducing hydrogen bonding properties of the acrylic resin, increasing the affinity with the polymer including vinyl chloride as a constitutional unit, and reducing a viscosity of the ink, $R^{12}$ and $R^{13}$ are each independently preferably the hydrocarbon group which may include an oxygen atom.

In addition, it is preferable that $R^{12}$ and $R^{13}$ are bonded to each other to form a ring. The ring formed by the bonding of $R^{12}$ and $R^{13}$ to each other is preferably a 5-membered ring to an 8-membered ring.

Examples of the constitutional unit represented by Formula (1) include the following constitutional units.

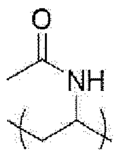
(1-1)

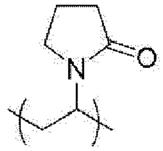
(1-2)

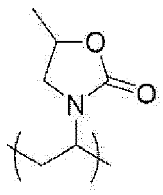
(1-3)

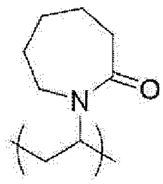
(1-4)

Formula (2)

In Formula (2), $R^{21}$ is preferably a hydrogen atom or a methyl group.

In Formula (2), the hydrocarbon group represented by $R^{22}$ and $R^{23}$ may be a linear hydrocarbon group, a branched hydrocarbon group, or a cyclic hydrocarbon group, but is preferably a linear hydrocarbon group.

The hydrocarbon group represented by $R^{22}$ and $R^{23}$ may be a saturated hydrocarbon group or an unsaturated hydrocarbon group, but is preferably a saturated hydrocarbon group.

That is, the hydrocarbon group represented by $R^{22}$ and $R^{23}$ is more preferably a linear alkyl group.

The number of carbon atoms in the hydrocarbon group represented by $R^{22}$ and $R^{23}$ is preferably 1 to 10 and more preferably 2 to 8.

Examples of the hydrocarbon group which may include an oxygen atom include a - divalent hydrocarbon group-OH, a -divalent hydrocarbon group-O-monovalent hydrocarbon group, a -divalent hydrocarbon group-C=(O)-monovalent hydrocarbon group, and a -divalent hydrocarbon group-C=(O)O-monovalent hydrocarbon group.

In Formula (2), from the viewpoint of reducing hydrogen bonding properties of the acrylic resin, increasing the affinity with the polymer including vinyl chloride as a constitutional unit, and reducing the viscosity of the ink, $R^{22}$ and $R^{23}$ are each independently preferably the hydrocarbon group which may include an oxygen atom.

In addition, it is preferable that $R^{22}$ and $R^{23}$ are bonded to each other to form a ring. The ring formed by the bonding of $R^{22}$ and $R^{23}$ to each other is preferably a 5-membered ring to an 8-membered ring.

Examples of the constitutional unit represented by Formula (2) include the following constitutional units.

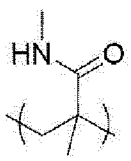
(2-1)

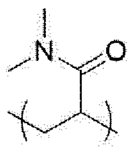
(2-2)

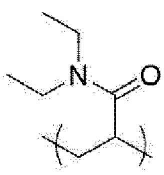
(2-3)

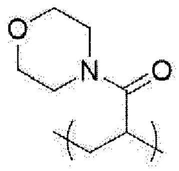
(2-4)

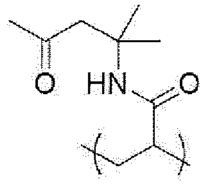
(2-5)

Formula (3)

In Formula (3), $R^{31}$ is preferably a hydrogen atom or a methyl group.

In Formula (3), the divalent linking group represented by $L^{11}$ is preferably an alkylene group having 1 to 3 carbon atoms or a group represented by any one of Formulae (L11) to (L14); more preferably an alkylene group having 1 to 3 carbon atoms or a group represented by any one of Formulae (L11) to (L13); and still more preferably an alkylene group having 1 to 3 carbon atoms or a group represented by Formula (L11).

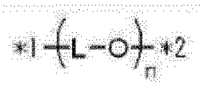 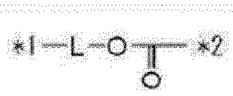 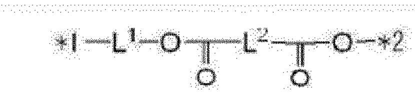 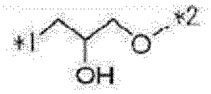

(L11) (L12) (L13) (L14)

In Formula (L11), L represents an alkylene group having 1 to 3 carbon atoms, n represents an integer of 1 to 4, *1 represents a bonding position with the oxygen atom, and *2 represents a bonding position with $R^{32}$.

In Formula (L12), L represents an alkylene group having 1 to 3 carbon atoms, *1 represents a bonding position with the oxygen atom, and *2 represents a bonding position with $R^{32}$.

In Formula (L13), $L^1$ and $L^2$ each independently represent an alkylene group having 1 to 3 carbon atoms, *1 represents a bonding position with the oxygen atom, and *2 represents a bonding position with $R^{32}$.

In Formula (L14), *1 represents a bonding position with the oxygen atom, and *2 represents a bonding position with $R^{32}$.

In Formula (L11), n is preferably an integer of 1 to 3, more preferably 1 or 2, and particularly preferably 1.

In Formula (3), the hydrocarbon group represented by $R^{32}$ may be a linear hydrocarbon group, a branched hydrocarbon group, or a cyclic hydrocarbon group, but is preferably a hydrocarbon group including a ring structure.

The hydrocarbon group represented by $R^{32}$ may be a saturated hydrocarbon group or an unsaturated hydrocarbon group, but is preferably a saturated hydrocarbon group.

The number of carbon atoms in the hydrocarbon group represented by $R^{32}$ is preferably 3 to 20, more preferably 3 to 15, still more preferably 3 to 12, and particularly preferably 3 to 10.

In the hydrocarbon group including at least one selected from the group consisting of - O-, -S-, -C(=O)-, -NH-, and -N<, examples of a combination of two or more of -O-, -S-, -C(=O)-, -NH-, and -N< include -C(=O)O-, -O-C(=O)O-, -C(=O)-NH-, and a pyrrolidone ring.

$R^{32}$ is preferably a hydrocarbon group including -C(=O)-NH-, a hydrocarbon group including -C(=O)O-, a hydrocarbon group including -O-C-O-, or a hydrocarbon group including a hydroxyl group.

Examples of the constitutional unit represented by Formula (3) include the following constitutional units.

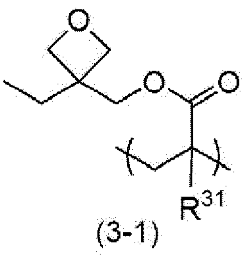 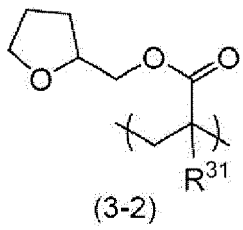 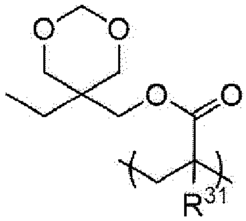 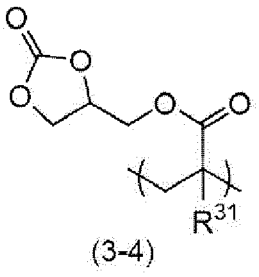

(3-1) (3-2) (3-3) (3-4)

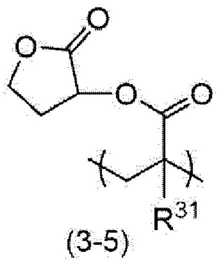 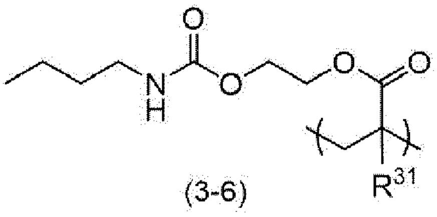 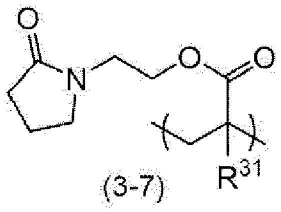

(3-5) (3-6) (3-7)

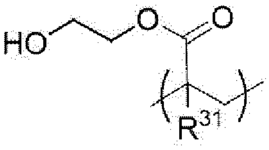 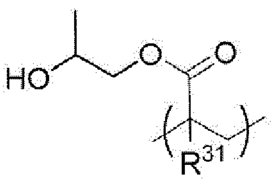 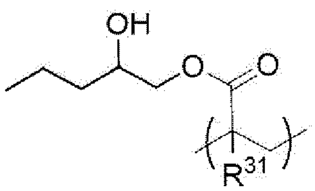

(3-8) (3-9) (3-10)

Formula (4)

In Formula (4), $R^{41}$ is preferably a hydrogen atom or a methyl group.

In Formula (4), the monovalent heterocyclic group represented by $R^{42}$ and $R^{43}$ refers to a group obtained by removing one hydrogen atom from a heterocyclic compound.

A heterocycle in the monovalent heterocyclic group is preferably a 5-membered ring or a 6-membered ring. In addition, the above-described heterocycle may form a fused ring with an aliphatic ring, an aromatic ring, or another heterocycle.

Examples of a heteroatom in the above-described heterocycle include an N atom, an O atom, and an S atom, and an N atom is preferable.

Examples of the above-described heterocycle include a pyridine ring, a piperidine ring, a furan ring, a furfuran ring, a thiophene ring, a pyrrole ring, a quinoline ring, a morpholine ring, an indole ring, an imidazole ring, a pyrazole ring, a carbazole ring, a phenothiazine ring, a phenoxazine ring, an indoline ring, a pyrrolidone ring, a thiazole ring, a pyrazine ring, a thiadiazine ring, a benzoquinoline ring, and a thiadiazole ring.

In Formula (4), from the viewpoint of increasing the affinity with the polymer including vinyl chloride as a constitutional unit, $R^{42}$ and $R^{43}$ are each independently preferably a cyano group or a monovalent heterocyclic group.

Examples of the constitutional unit represented by Formula (4) include the following constitutional units.

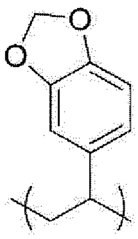
(4-1)

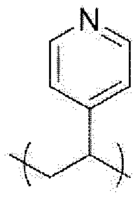
(4-2)

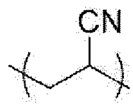
(4-3)

Formula (5)

In Formula (5), the hydrocarbon group represented by $R^{51}$ may be a linear hydrocarbon group, a branched hydrocarbon group, or a cyclic hydrocarbon group.

The hydrocarbon group represented by $R^{51}$ may be a saturated hydrocarbon group or an unsaturated hydrocarbon group, but is preferably a saturated hydrocarbon group.

The number of carbon atoms in the hydrocarbon group represented by $R^{51}$ is preferably 1 to 10.

Examples of the constitutional unit represented by Formula (5) include the following constitutional units.

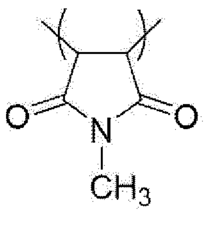
(5-1)

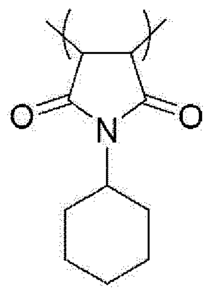
(5-2)

The constitutional unit B is a constitutional unit derived from the polymerizable compound B, and can be introduced into the acrylic resin by using the polymerizable compound B as a raw material.

A polarity element (δP) and a hydrogen bonding element (δH) of the HSP value for each polymerizable compound are shown below. The unit is $MPa^{1/2}$.

The polymerizable compounds shown in Table 1 are a polymerizable compound in which the polarity element of the HSP value is less than 4.8 $MPa^{1/2}$, and do not correspond to the polymerizable compound B.

The polymerizable compounds shown in Tables 2 to 6 are a polymerizable compound in which the polarity

element of the HSP value is 4.8 $MPa^{1/2}$ or more, and correspond to the polymerizable compound B. In a case of a polymerizable compound derived from the constitutional unit represented by Formulae (1) to (5), the corresponding formula is shown.

Table 1

| Structural formula | δP | δH |
|---|---|---|
| 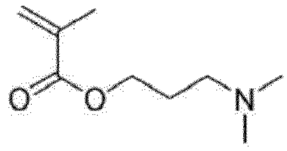 | 3.8 | 4.9 |
| 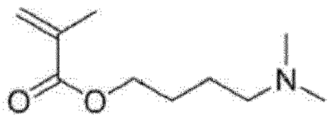 | 3.3 | 4.4 |
| 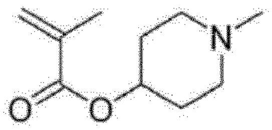 | 3.8 | 5.6 |
| 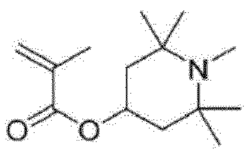 | 1.8 | 2.9 |
| 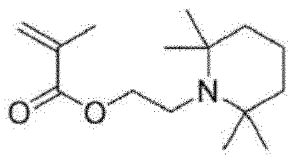 | 2.1 | 3 |
| 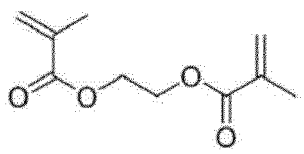 | 4.2 | 5.6 |
| 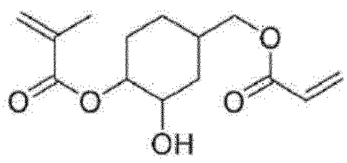 | 4.7 | 7.7 |
| 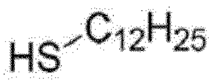 | 2.8 | 3 |
| 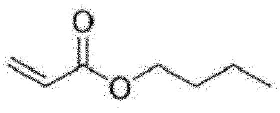 | 4.2 | 5.5 |
| 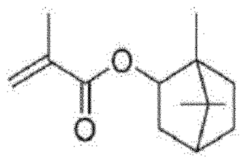 | 2.3 | 2.4 |

Table 2

| Structural formula | δP | δH | Corresponding formula |
|---|---|---|---|
| 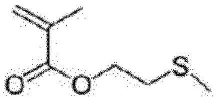 | 5.1 | 5.9 | Formula (3) |
| 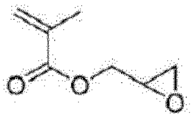 | 6.6 | 6.9 | Formula (3) |
| 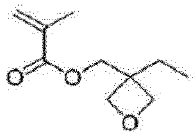 | 4.8 | 4.9 | Formula (3) |
| 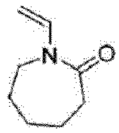 | 5.6 | 5.3 | Formula (1) |
| 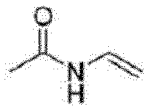 | 13.7 | 10.3 | Formula (1) |
| 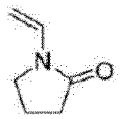 | 8.4 | 6.3 | Formula (1) |
| 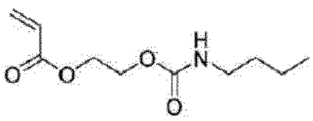 | 7.7 | 7.7 | Formula (3) |
| 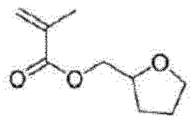 | 5.1 | 5.5 | Formula (3) |
| 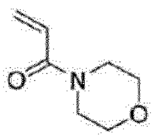 | 11.2 | 5.8 | Formula (2) |
| 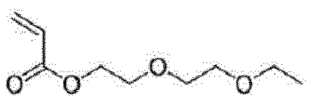 | 5.1 | 6.5 | Formula (3) |
| 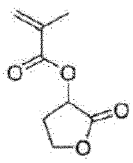 | 8.3 | 6.8 | Formula (3) |

(continued)

| Structural formula | δP | δH | Corresponding formula |
|---|---|---|---|
| 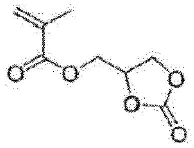 | 14.4 | 6.7 | Formula (3) |

Table 3

| Structural formula | δP | δH | Corresponding formula |
|---|---|---|---|
| 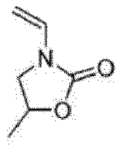 | 8.7 | 6.6 | Formula (1) |
| 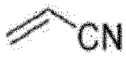 | 13.9 | 7.3 | Formula (4) |
| 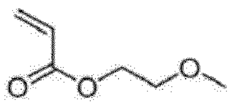 | 5.6 | 7.2 | Formula (3) |
| 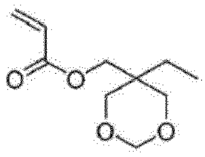 | 5.9 | 5.7 | Formula (3) |
| 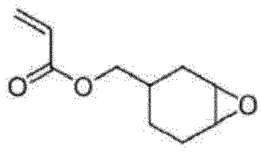 | 5.5 | 5.6 | Formula (3) |
| 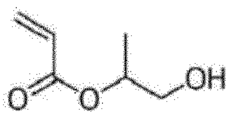 | 6.9 | 11.9 | Formula (3) |
| 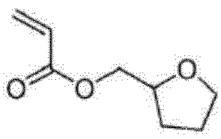 | 5.6 | 5.9 | Formula (3) |
| 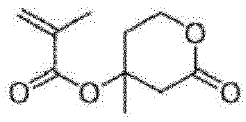 | 6.7 | 5.6 | Formula (3) |
| 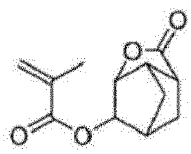 | 5.8 | 4.4 | Formula (3) |

(continued)

| Structural formula | δP | δH | Corresponding formula |
|---|---|---|---|
| 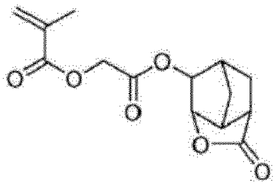 | 4.8 | 5.5 | Formula (3) |

Table 4

| Structural formula | δP | δH | Corresponding formula |
|---|---|---|---|
| 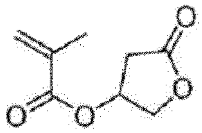 | 8.5 | 6.7 | Formula (3) |
| 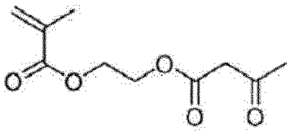 | 7 | 6.8 | Formula (3) |
| 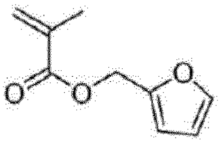 | 5.1 | 6.2 | Formula (3) |
| 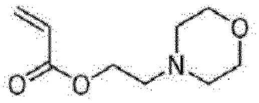 | 5.6 | 7.3 | Formula (3) |
| 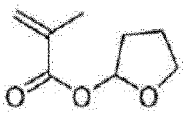 | 5.4 | 5.8 | Formula (3) |
| 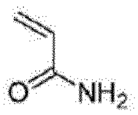 | 14.7 | 13.7 | Formula (2) |
| 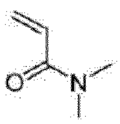 | 10.4 | 7.6 | Formula (2) |
| 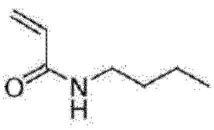 | 10.2 | 8 | Formula (2) |
| 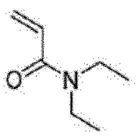 | 8.8 | 3.5 | Formula (2) |

(continued)

| Structural formula | δP | δH | Corresponding formula |
|---|---|---|---|
| 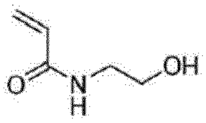 | 15.2 | 15.7 | Formula (2) |

Table 5

| Structural formula | δP | δH | Corresponding formula |
|---|---|---|---|
| 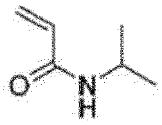 | 10.2 | 6.5 | Formula (2) |
| 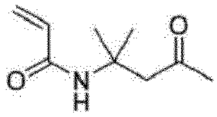 | 9 | 5.4 | Formula (2) |
| 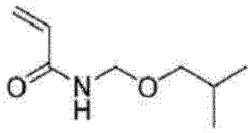 | 8.7 | 5.5 | Formula (2) |
| 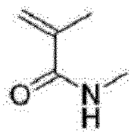 | 10.6 | 6.8 | Formula (2) |
| 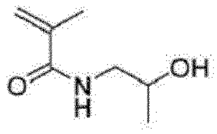 | 10.4 | 10.5 | Formula (2) |
| 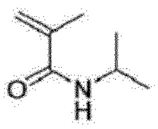 | 10.9 | 7.2 | Formula (2) |
| 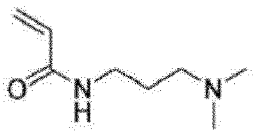 | 9.7 | 7.2 | Formula (2) |
| 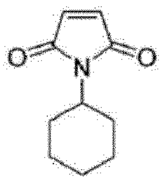 | 6.4 | 4.4 | Formula (5) |
| 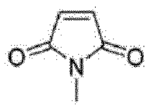 | 11.9 | 7 | Formula (5) |

(continued)

| Structural formula | δP | δH | Corresponding formula |
|---|---|---|---|
| 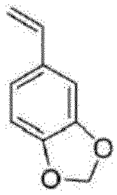 | 5.4 | 6.4 | Formula (4) |

Table 6

| Structural formula | δP | δH | Corresponding formula |
|---|---|---|---|
| 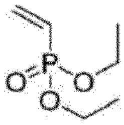 | 12.6 | 7.3 | Formula (4) |
| 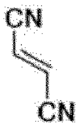 | 21.1 | 9.1 | Formula (4) |
| 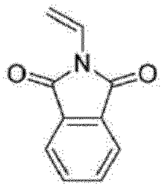 | 7.5 | 4.6 | Formula (4) |
| 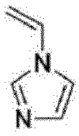 | 8 | 5.9 | Formula (4) |
| 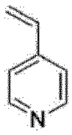 | 5.8 | 5.2 | Formula (4) |
| 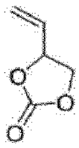 | 16.9 | 6.3 | Formula (4) |
| 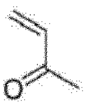 | 7.9 | 5.8 | Formula (4) |
| 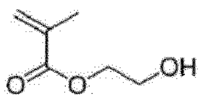 | 7.3 | 11.5 | Formula (3) |
| 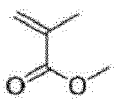 | 5.3 | 6.6 | - |

The acrylic resin preferably contains two or more kinds of the constitutional units B.

In a case where the acrylic resin contains two or more kinds of the constitutional units B, the constitutional unit B preferably includes the constitutional unit represented by Formula (1) and the constitutional unit represented by Formula (2), or includes the constitutional unit represented by Formula (1) and the constitutional unit represented by Formula (3).

From the viewpoint of unevenly dispersing the acrylic resin on the surface of the ink film and improving blocking resistance, a mass ratio of the constitutional unit A to the constitutional unit B is preferably 0.01 or more, more preferably 0.03 or more, and still more preferably 0.05 or more.

From the viewpoint of further improving the affinity with the base material for lamination and improving the blocking resistance, the mass ratio of the constitutional unit A to the constitutional unit B is preferably 0.65 or less, more preferably 0.55 or less, still more preferably 0.45 or less, and particularly preferably 0.35 or less.

From the above viewpoint, the mass ratio of the constitutional unit A to the constitutional unit B is preferably 0.01 to 0.65, more preferably 0.03 to 0.55, still more preferably 0.05 to 0.45, and particularly preferably 0.05 to 0.35.

The acrylic resin may contain other constitutional units in addition to the constitutional unit A and the constitutional unit B.

From the viewpoint of improving the adhesiveness to the base material for lamination, the total content of the constitutional unit A and the constitutional unit B is preferably 30% by mass or more, more preferably 45% by mass or more, and still more preferably 60% by mass or more with respect to the total amount of the acrylic resin. The total content of the constitutional unit A and the constitutional unit B may be 100% by mass. That is, the acrylic resin may consist of only the constitutional unit A and the constitutional unit B.

In a case where the acrylic resin contains other constitutional units, the other constitutional units are not particularly limited, and examples thereof include a constitutional unit derived from a monofunctional polymerizable monomer described later.

Physical properties

A glass transition temperature of the acrylic resin is preferably 150°C or lower, more preferably 130°C or lower, and still more preferably 100°C or lower. The lower limit value of the glass transition temperature is not particularly limited, but from the viewpoint of blocking resistance, it is preferably -20°C.

In the present disclosure, the glass transition temperature is measured using a differential scanning calorimeter, for example, using a product name "DSC-60" manufactured by Shimadzu Corporation.

In a case where the glass transition temperature of the acrylic resin is 150°C or lower, when the lamination base material is thermocompression-bonded to the image, mobility of the acrylic resin is improved, and the adhesiveness to the lamination base material is improved.

A solubility parameter (SP value) of the acrylic resin is preferably 7.5 $MPa^{1/2}$ to 14.0 $MPa^{1/2}$, more preferably 8.5 $MPa^{1/2}$ to 13.0 $MPa^{1/2}$, and still more preferably 9.5 $MPa^{1/2}$ to 12.0 $MPa^{1/2}$.

In the present disclosure, the SP value means a Hansen solubility parameter.

The SP value of the acrylic resin is calculated by the following method.

100 mg of a sample is completely dissolved in 2 mL of THF, and deionized water or n-hexane is added dropwise to the solution, and an SP value of the sample is calculated from a volume fraction immediately before a timing of turbidity using the following expression.

$$\text{SP value of THF} = \delta_T$$

$$\text{SP value of water} = \delta_W$$

$$\text{SP value of n-hexane} = \delta_H$$

Volume fraction (water):

$$\text{deionized water/(deionized water + THF)} = V_W$$

Volume fraction (hexane):

$$\text{hexane/(hexane + THF)} = V_H$$

$$\text{SP value of mixed solution of deionized water/THF} = \delta_{WT} = \delta_T \times (1 - V_W) + \delta_W \times V_W$$

$$\text{SP value of mixed solution of n-hexane/THF} = \delta_{HT} = \delta_T \times (1 - V_H) + \delta_H \times V_H$$

$$\text{SP value of sample} = \delta_P = (\delta_{WT} \times (V_W)^{0.5} + \delta_{HT} \times (VH)^{0.5})/((VW)^{0.5} + (VH)^{0.5})$$

In a case where the SP value of the acrylic resin is within the above-described range, the adhesiveness to the base material for lamination is improved.

From the viewpoint of improving the adhesiveness to the base material for lamination, a weight-average molecular weight of the acrylic resin is preferably 1,000 or more, more preferably 3,000 or more, and still more preferably 5,000 or more. On the other hand, from the viewpoint of j ettability and storage stability of the ink, the weight-average molecular weight of the acrylic resin is preferably 80,000 or less, more preferably 60,000 or less, and still more preferably 40,000 or less.

In the present disclosure, the weight-average molecular weight is measured by the same method as the measuring method of the number-average molecular weight described above.

From the viewpoint of improving the adhesiveness to the base material for lamination, a content of the acrylic resin is preferably 0.1% by mass or more, more preferably 0.3% by mass or more, and still more preferably 0.5% by mass or more with respect to the total amount of the ink. On the other hand, from the viewpoint of j ettability and storage stability of the ink, the content of the acrylic resin is preferably 10% by mass or less, more preferably 8% by mass or less, and still more preferably 6% by mass or less with respect to the total amount of the ink.

Polymerizable monomer

The ink according to the present disclosure contains at least one polymerizable monomer.

In the present disclosure, the "monomer" refers to a compound having a molecular weight of 1,000 or less.

In the present disclosure, the polymerizable monomer refers to a monomer having at least one polymerizable group in one molecule. The polymerizable group may be a cationically polymerizable group or a radically polymerizable group, and from the viewpoint of curing properties, a radically polymerizable group is preferable. In addition, from the viewpoint of curing properties, the radically polymerizable group is preferably an ethylenically unsaturated group.

The polymerizable monomer may be a monofunctional polymerizable monomer having one polymerizable group or a polyfunctional polymerizable monomer having two or more polymerizable groups.

Monofunctional polymerizable monomer

The monofunctional polymerizable monomer is not particularly limited as long as it is a monomer having one polymerizable group. From the viewpoint of curing properties, the monofunctional polymerizable monomer is preferably a monofunctional radically polymerizable monomer, and more preferably a monofunctional ethylenically unsaturated monomer.

Examples of the monofunctional ethylenically unsaturated monomer include monofunctional (meth)acrylate, monofunctional (meth)acrylamide, a monofunctional aromatic vinyl compound, monofunctional vinyl ether, and a monofunctional N-vinyl compound.

Examples of the monofunctional (meth)acrylate include methyl (meth)acrylate, ethyl (meth)acrylate, propyl (meth)acrylate, n-butyl (meth)acrylate, hexyl (meth)acrylate, 2-ethylhexyl (meth)acrylate, tert-octyl (meth)acrylate, isoamyl (meth)acrylate, decyl (meth)acrylate, isodecyl (meth)acrylate, lauryl (meth)acrylate, stearyl (meth)acrylate, isostearyl (meth)acrylate, cyclohexyl (meth)acrylate, 4-n-butylcyclohexyl (meth)acrylate, 4-tert-butylcyclohexyl (meth)acrylate, bornyl (meth)acrylate, isobomyl (meth)acrylate, 2-ethylhexyldiglycol (meth)acrylate, butoxyethyl (meth)acrylate, 2-chloroethyl (meth)acrylate, 4-bromobutyl (meth)acrylate, cyanoethyl (meth)acrylate, benzyl (meth)acrylate, butoxymethyl (meth)acrylate, 3-methoxybutyl (meth)acrylate, 2-(2-methoxyethoxy)ethyl (meth)acrylate, 2-(2-butoxyethoxy) ethyl (meth)acrylate, 2,2,2-tetrafluoroethyl (meth)acrylate, 1H,1H,2H,2H-perfluorodecyl (meth)acrylate, 4-butylphenyl (meth)acrylate, phenyl (meth)acrylate, 2,4,5-tetramethylphenyl (meth)acrylate, 4-chlorophenyl (meth)acrylate, 2-phenoxymethyl (meth)acrylate, 2-phenoxyethyl (meth)acrylate, glycidyl (meth)acrylate, glycidyloxybutyl (meth)acrylate, glycidyloxyethyl (meth)acrylate, glycidyloxypropyl (meth)acrylate, tetrahydrofurfuryl (meth)acrylate, 2-hydroxyethyl (meth)acrylate, 3-hydroxypropyl (meth)acrylate, 2-hydroxypropyl (meth)acrylate, 2-hydroxybutyl (meth)acrylate, 3-hydroxybutyl (meth)acrylate, 4-hydroxybutyl (meth)acrylate, cyclic trimethylolpropane formal(meth)acrylate, phenylglycidyl ether (meth)acrylate, dimethylaminoethyl (meth)acrylate, diethylaminoethyl (meth)acrylate, dimethylaminopropyl (meth) acrylate, diethylaminopropyl (meth)acrylate, trimethoxysilylpropyl (meth)acrylate, trimethylsilylpropyl (meth)acrylate,

polyethylene oxide monomethyl ether (meth)acrylate, polyethylene oxide (meth)acrylate, polyethylene oxide monoalkyl ether (meth)acrylate, dipropylene glycol (meth)acrylate, polypropylene oxide monoalkyl ether (meth)acrylate, 2-methacryloyloxyethyl succinate, 2-methacryloyloxyhexahydrophthalic acid, 2-methacryloyloxyethyl-2-hydroxypropyl phthalate, ethoxydiethylene glycol (meth)acrylate, butoxydiethylene glycol (meth)acrylate, trifluoroethyl (meth)acrylate, perfluorooctylethyl (meth)acrylate, 2-hydroxy-3-phenoxypropyl (meth)acrylate, ethylene oxide (EO)-modified phenol (meth) acrylate, EO-modified cresol (meth)acrylate, EO-modified nonylphenol (meth)acrylate, propylene oxide (PO)-modified nonylphenol (meth)acrylate, EO-modified-2-ethylhexyl (meth)acrylate, dicyclopentenyl (meth)acrylate, dicyclopentenyloxyethyl (meth)acrylate, dicyclopentanyl (meth)acrylate, (3-ethyl-3-oxetanylmethyl) (meth)acrylate, phenoxyethylene glycol (meth)acrylate, 2-carboxyethyl (meth)acrylate, and 2-(meth)acryloyloxyethyl succinate.

Examples of the monofunctional (meth)acrylamide include (meth)acrylamide, N-methyl (meth)acrylamide, N-ethyl (meth)acrylamide, N-propyl (meth)acrylamide, N-n-butyl (meth)acrylamide, N-t-butyl (meth)acrylamide, N-butoxymethyl (meth)acrylamide, N-isopropyl (meth)acrylamide, N-methylol (meth)acrylamide, N,N-dimethyl (meth)acrylamide, N,N-diethyl (meth)acrylamide, and (meth)acryloylmorpholine.

Examples of the monofunctional aromatic vinyl compound include styrene, dimethylstyrene, trimethylstyrene, isopropyl styrene, chloromethylstyrene, methoxystyrene, acetoxystyrene, chlorostyrene, dichlorostyrene, bromostyrene, vinyl benzoic acid methyl ester, 3-methylstyrene, 4-methylstyrene, 3-ethylstyrene, 4-ethylstyrene, 3-propyl styrene, 4-propylstyrene, 3-butylstyrene, 4-butylstyrene, 3-hexylstyrene, 4-hexylstyrene, 3-octylstyrene, 4-octylstyrene, 3-(2-ethylhexyl)styrene, 4-(2-ethylhexyl)styrene, allyl styrene, isopropenyl styrene, butenyl styrene, octenyl styrene, 4-t-butoxycarbonyl styrene, and 4-t-butoxystyrene.

Examples of the monofunctional vinyl ether include methyl vinyl ether, ethyl vinyl ether, propyl vinyl ether, n-butyl vinyl ether, t-butyl vinyl ether, 2-ethylhexyl vinyl ether, n-nonyl vinyl ether, lauryl vinyl ether, cyclohexyl vinyl ether, cyclohexyl methyl vinyl ether, 4-methylcyclohexyl methyl vinyl ether, benzyl vinyl ether, dicyclopentenyl vinyl ether, 2-dicyclopentenoxyethyl vinyl ether, methoxyethyl vinyl ether, ethoxyethyl vinyl ether, butoxyethyl vinyl ether, methoxyethoxyethyl vinyl ether, ethoxyethoxyethyl vinyl ether, methoxypolyethylene glycol vinyl ether, tetrahydrofurfuryl vinyl ether, 2-hydroxyethyl vinyl ether, 2-hydroxypropyl vinyl ether, 4-hydroxybutyl vinyl ether, 4-hydroxymethylcyclohexylmethyl vinyl ether, diethylene glycol monovinyl ether, polyethylene glycol vinyl ether, chloroethyl vinyl ether, chlorobutyl vinyl ether, chloroethoxyethyl vinyl ether, phenylethyl vinyl ether, and phenoxypolyethylene glycol vinyl ether.

Examples of the monofunctional N-vinyl compound include N-vinyl-ε-caprolactam and N-vinylpyrrolidone.

Polyfunctional polymerizable monomer

The polyfunctional polymerizable monomer is not particularly limited as long as it is a compound having two or more polymerizable groups. From the viewpoint of curing properties, the polyfunctional polymerizable compound is preferably a polyfunctional radically polymerizable monomer, and more preferably a polyfunctional ethylenically unsaturated monomer.

Examples of the polyfunctional ethylenically unsaturated monomer include polyfunctional (meth)acrylate and polyfunctional vinyl ether.

Examples of the polyfunctional (meth)acrylate include ethylene glycol di(meth)acrylate, diethylene glycol di(meth)acrylate, triethylene glycol di(meth)acrylate, polyethylene glycol di(meth)acrylate, propylene glycol di(meth) acrylate, dipropylene glycol di(meth)acrylate, tripropylene glycol di(meth)acrylate, polypropylene glycol di(meth)acrylate, butylene glycol di(meth)acrylate, tetraethylene glycol di(meth)acrylate, neopentyl glycol di(meth)acrylate, 3-methyl-1,5-pentanediol di(meth)acrylate, hexanediol di(meth)acrylate, heptanediol di(meth)acrylate, EO-modified neopentyl glycol di(meth)acrylate, PO-modified neopentyl glycol di(meth)acrylate, EO-modified hexanediol di(meth)acrylate, PO-modified hexanediol di(meth)acrylate, octanediol di(meth)acrylate, nonanediol di(meth)acrylate, decanediol di(meth)acrylate, dodecanediol di(meth)acrylate, 1,6-hexanediol di(meth)acrylate, glycerin di(meth)acrylate, pentaerythritol di(meth)acrylate, ethylene glycol diglycidyl ether di(meth)acrylate, diethylene glycol diglycidyl ether di(meth)acrylate, tricyclodecanedimethanol di(meth)acrylate, trimethylolethane tri(meth)acrylate, trimethylolpropane tri(meth)acrylate, trimethylolpropane EO-added tri(meth)acrylate, pentaerythritol tri(meth)acrylate, pentaerythritol tetra(meth)acrylate, dipentaerythritol tetra(meth)acrylate, dipentaerythritol penta(meth)acrylate, dipentaerythritol hexa(meth)acrylate, tri(meth)acryloyloxyethoxytrimethylolpropane, glycerin polyglycidyl ether poly(meth)acrylate, and tris(2-acryloyloxyethyl) isocyanurate.

The polyfunctional (meth)acrylate may be a urethane (meth)acrylate which is a reaction product of a bifunctional isocyanate compound and a hydroxyl group-containing polyfunctional (meth)acrylate. Examples of the bifunctional isocyanate compound include compounds described later.

The polyfunctional (meth)acrylate may be an epoxy (meth)acrylate which is a reaction product of (meth)acrylic acid and an epoxy resin. Examples of the epoxy resin include a bisphenol A-type epoxy resin and a cresol novolac-type epoxy resin.

Examples of the polyfunctional vinyl ether include 1,4-butanediol divinyl ether, ethylene glycol divinyl ether, diethylene glycol divinyl ether, triethylene glycol divinyl ether, polyethylene glycol divinyl ether, propylene glycol divinyl

ether, butylene glycol divinyl ether, hexanediol divinyl ether, 1,4-cyclohexanedimethanol divinyl ether, bisphenol A alkylene oxide divinyl ether, bisphenol F alkylene oxide divinyl ether, trimethylolethane trivinyl ether, trimethylolpropane trivinyl ether, ditrimethylolpropane tetravinyl ether, glycerin trivinyl ether, pentaerythritol tetravinyl ether, dipentaerythritol pentavinyl ether, dipentaerythritol hexavinyl ether, EO-added trimethylolpropane trivinyl ether, PO-added trimethylolpropane trivinyl ether, EO-added ditrimethylolpropane tetravinyl ether, PO-added ditrimethylolpropane tetravinyl ether, EO-added pentaerythritol tetravinyl ether, PO-added pentaerythritol tetravinyl ether, EO-added dipentaerythritol hexavinyl ether, and PO-added dipentaerythritol hexavinyl ether.

Among these, it is preferable that the polymerizable monomer contains a polymerizable monomer C which has a (meth)acryloyl group and has a solubility parameter (SP value) of 16.5 $MPa^{1/2}$ to 21.3 $MPa^{1/2}$.

In a case where the ink contains the polymerizable monomer C, polymerization of the polymerizable monomer C proceeds in a state in which the ink is moderately immersed in the base material for image recording, and an image having excellent adhesiveness to the base material for image recording is obtained, whereby excellent laminating peeling strength is achieved.

The SP value of the polymerizable monomer C is preferably 18 $MPa^{1/2}$ to 19.5 $MPa^{1/2}$.

From the viewpoint of further improving the curing properties of the ink (that is, viewpoint that the polymerizable monomer C has polymerizability), the polymerizable monomer C preferably has a (meth)acryloyloxy group (preferably, an acryloyloxy group).

The number of (meth)acryloyl groups included in the polymerizable monomer C may be only 1 or 2 or more, but is preferably only 1.

A molecular weight of the polymerizable monomer C is preferably 215 or less.

The ink is more likely to be immersed in the base material for image recording, so that the adhesiveness of the image to the base material for image recording is further improved. Furthermore, since a distance between crosslinking points is shortened, a density of the ink film is further improved. As a result, the laminating peeling strength is further improved.

The molecular weight of the polymerizable monomer C is more preferably 205 or less and still more preferably 200 or less.

Examples of the polymerizable monomer C include the following compounds.

Tetrahydrofurfuryl acrylate (SP value: 18.8 $MPa^{1/2}$)
Cyclic trimethylolpropane formal acrylate (SP value: 19.0 $MPa^{1/2}$)
Etoxyethyethygolicol acrylate (SP value: 18.2 $MPa^{1/2}$)
Cyclohexyl acrylate (SP value: 17.9 $MPa^{1/2}$)
Isobornyl acrylate (SP value: 17.1 $MPa^{1/2}$)
Phenoxyethyl acrylate (SP value: 19.44 $MPa^{1/2}$)
N,N-Dimethylacrylamide (SP value: 21.4 $MPa^{1/2}$)
4-tert-Butylcyclohexyl acrylate (SP value: 16.7 $MPa^{1/2}$)
3,3,5-Trimethylcyclohexyl acrylate (SP value: 16.7 $MPa^{1/2}$)
4-Hydroxydibutyl acrylate (SP value: 21.0 $MPa^{1/2}$)
2-Methyl-2-ethyl-1,3-dioxolan-4-yl)methyl acrylate (SP value: 18.2 $MPa^{1/2}$)
Benzyl acrylate (SP value: 19.0 $MPa^{1/2}$)
(3-Ethoxytetan-3-yl)methyl acrylate (SP value: 18.6 $MPa^{1/2}$)
2-Oxotetrahydrofuran-3-yl acrylate (SP value: 21.2 $MPa^{1/2}$)
Lauryl acrylate (SP value: 16.7 $MPa^{1/2}$)

Among these, from the viewpoint of improving the adhesiveness to the base material for image recording and the adhesiveness to the base material for lamination, the polymerizable monomer C preferably includes at least one selected from the group consisting of tetrahydrofurfuryl acrylate, cyclic trimethylolpropane formal acrylate, cyclohexyl acrylate, and etoxyethyethygolicol acrylate; more preferably includes at least one selected from the group consisting of cyclic trimethylolpropane formal acrylate, cyclohexyl acrylate, and etoxyethyethygolicol acrylate; and still more preferably includes at least one selected from the group consisting of cyclohexyl acrylate and etoxyethyethygolicol acrylate.

A content of the polymerizable monomer C is preferably 30% by mass to 75% by mass, more preferably 40% by mass to 70% by mass, and still more preferably 44% by mass to 63% by mass with respect to the total amount of the ink.

The polymerizable monomer preferably contains at least one N-vinyl compound.

In a case in which the ink contains the N-vinyl compound, the adhesiveness between the image and the base material for image recording is further improved, and as a result, the laminating peeling strength is further improved.

Same as the polymerizable monomer C, the N-vinyl compound is a compound having an SP value corresponding to 16.5 $MPa^{1/2}$ to 21.3 $MPa^{1/2}$. Therefore, the N-vinyl compound contributes to the adhesiveness between the base material for image recording and the image.

Examples of the N-vinyl compound include N-vinylpyrrolidone, N-vinylcaprolactam, N-vinylcarbazole, N-vinylimidazole, N-vinylphthalimide, N-vinylacetamide, N-vinylformamide, and 5-methyl-3-vinyl-2-oxazolidinone.

Among these, from the viewpoint of high solubility in the base material for image recording and improvement of the adhesiveness between the base material for image recording and the image, the N-vinyl compound is preferably at least one selected from the group consisting of N-vinylcaprolactam and 5-methyl-3-vinyl-2-oxazolidinone.

A content of the N-vinyl compound is preferably 10% by mass to 50% by mass, more preferably 15% by mass to 40% by mass, and still more preferably 20% by mass to 30% by mass with respect to the total amount of the ink.

A proportion of the total of the polymerizable monomer C and the N-vinyl compound with respect to all polymerizable monomers contained in the ink is preferably 80% by mass or more and more preferably 90% by mass or more. The upper limit value of the above-described proportion is not particularly limited, and the above-described proportion may be 100% by mass. That is, all polymerizable monomers contained in the ink may be the polymerizable monomer C and the N-vinyl compound.

A weighted average value of glass transition temperatures in a case where all polymerizable monomers contained in the ink are respectively homopolymers is preferably 0°C to 100°C, more preferably 5°C to 50°C, and still more preferably 10°C to 30°C. In a case where the above-described weighted average value is 0°C to 100°C, since the ink film (that is, the image) obtained by curing the ink has more excellent thermal plasticity, the adhesiveness between the image and the base material for lamination is excellent.

The glass transition temperature in a case where the polymerizable monomer is homopolymerized is measured by the following method.

First, a homopolymer having a weight-average molecular weight of 10,000 to 20,000 is produced using the polymerizable monomer. A glass transition temperature of the produced homopolymer is measured according to the method described in JIS K 7121:2012.

In the present disclosure, the glass transition temperature is measured using a differential scanning calorimeter, for example, using a product name "DSC-60" manufactured by Shimadzu Corporation.

In the present disclosure, the weight-average molecular weight is measured by gel permeation chromatography (GPC). For example, HLC-8220GPC (manufactured by Tosoh Corporation) is used as GPC, three columns of TSKgel, SuperMultipore HZ-H (manufactured by Tosoh Corporation; 4.6 mmID × 15 cm) are used as a column, and tetrahydrofuran (THF) is used as an eluent. As the conditions, a sample concentration of 0.45% by mass, a flow rate of 0.35 ml/min, a sample injection amount of 10 μL, and a measurement temperature of 40°C are set, and a differential refractive index (RI) detector is used for detection. A calibration curve is obtained from, as a standard sample, eight samples of product names "TSK Standard polystyrene" manufactured by Tosoh Corporation: "F-40", "F-20", "F-4", "F-1", "A-5000", "A-2500", "A-1000", and "n-propylbenzene".

The glass transition temperature of the homopolymer varies depending on the weight-average molecular weight of the homopolymer, but the variation is negligibly small in a case where the weight-average molecular weight is 10,000 to 20,000.

The weighted average value of the glass transition temperatures is calculated by the following expression. In the expression, $T_i$ represents a glass transition temperature in a case where an i-th polymerizable monomer contained in the ink is a homopolymer, and $C_i$ represents a content (% by mass) of the i-th polymerizable monomer with respect to the total amount of the ink.

Weighted average value of glass transition temperatures = $\Sigma T_i C_i / \Sigma C_i$

From the viewpoint of improving the curing properties of the ink, a content of the polymerizable monomer is preferably 40% by mass to 95% by mass and more preferably 60% by mass to 90% by mass with respect to the total amount of the ink.

Polymerization initiator

The ink preferably contains at least one polymerization initiator.

As the polymerization initiator, a photoradical polymerization initiator which absorbs light to generate a radical as a polymerization initiation species is preferable.

Examples of the polymerization initiator include an alkylphenone compound, an acylphosphine compound, an aromatic onium salt compound, an organic peroxide, a thio compound, a hexaarylbiimidazole compound, a ketoxime ester compound, a borate compound, an azinium compound, a metallocene compound, an active ester compound, a carbon halogen bond-containing compound, and an alkylamine compound.

Among these, as the polymerization initiator, at least one compound selected from the group consisting of an acylphosphine compound and a thio compound is preferable, and at least one compound selected from the group consisting of an acylphosphine oxide compound and a thioxanthone compound is preferable. It is still more preferable to use an acylphosphine oxide compound and a thioxanthone compound in combination.

Examples of the acylphosphine oxide compound include a monoacylphosphine oxide compound and a

bisacylphosphine oxide compound. The acylphosphine oxide compound is preferably a bisacylphosphine oxide compound.

Examples of the monoacylphosphine oxide compound include isobutyryl diphenylphosphine oxide, 2-ethylhexanoyldiphenylphosphine oxide, 2,4,6-trimethylbenzoyldiphenylphosphine oxide, (2,4,6-trimethylbenzoyl)ethoxyphenylphosphine oxide, o-toluyldiphenylphosphine oxide, p-t-butylbenzoyldiphenylphosphine oxide, 3-pyridylcarbonyldiphenylphosphine oxide, acryloyl diphenylphosphine oxide, benzoyl diphenylphosphine oxide, pivaloyl phenylphosphinic acid vinyl ester, adipoyl bisdiphenylphosphine oxide, pivaloyl diphenylphosphine oxide, p-toluyldiphenylphosphine oxide, 4-(t-butyl)benzoyldiphenylphosphine oxide, terephthaloyl bisdiphenylphosphine oxide, 2-methylbenzoyldiphenylphosphine oxide, versatoyl diphenylphosphine oxide, 2-methyl-2-ethylhexanoyldiphenylphosphine oxide, 1-methyl-cyclohexanoyldiphenylphosphine oxide, pivaloyl phenylphosphinic acid methyl ester, and pivaloyl phenylphosphinic acid isopropyl ester.

Examples of the bisacylphosphine oxide compound include bis(2,6-dichlorobenzoyl)phenylphosphine oxide, bis(2,6-dichlorobenzoyl)-2,5-dimethylphenylphosphine oxide, bis(2,6-dichlorobenzoyl)-4-ethoxyphenylphosphine oxide, bis(2,6-dichlorobenzoyl)-4-propylphenylphosphine oxide, bis(2,6-dichlorobenzoyl)-2-naphthylphosphine oxide, bis(2,6-dichlorobenzoyl)-1-naphthylphosphine oxide, bis(2,6-dichlorobenzoyl)-4-chlorophenylphosphine oxide, bis(2,6-dichlorobenzoyl)-2,4-dimethoxyphenylphosphine oxide, bis(2,6-dichlorobenzoyl)decylphosphine oxide, bis(2,6-dichlorobenzoyl)-4-octylphenylphosphine oxide, bis(2,4,6-trimethylbenzoyl)phenylphosphine oxide, bis(2,4,6-trimethylbenzoyl)-2,5-dimethylphenylphosphine oxide, bis(2,6-dichloro-3,4,5-trimethoxybenzoyl)-2,5-dimethylphenylphosphine oxide, bis(2,6-dichloro-3,4,5-trimethoxybenzoyl)-4-ethoxyphenylphosphine oxide, bis(2-methyl-1-naphthoyl)-2,5-dimethylphenylphosphine oxide, bis(2-methyl-1-naphthoyl)-4-ethoxyphenylphosphine oxide, bis(2-methyl-1-naphthoyl)-2-naphthylphosphine oxide, bis(2-methyl-1-naphthoyl)-4-propylphenylphosphine oxide, bis(2-methyl-1-naphthoyl)-2,5-dimethylphenylphosphine oxide, bis(2-methoxy-1-naphthoyl)-4-ethoxyphenylphosphine oxide, bis(2-chloro-1-naphthoyl)-2,5-dimethylphenylphosphine oxide, and bis(2,6-dimethoxybenzoyl)-2,4,4-trimethylpentylphosphine oxide.

Among these, as the acylphosphine oxide compound, it is preferable to include at least one selected from the group consisting of bis(2,4,6-trimethylbenzoyl)phenylphosphine oxide (product name "Omnirad 819", manufactured by IGM Resins B.V) and 2,4,6-trimethylbenzoyldiphenylphosphine oxide (product name "Omnirad TPO-H", manufactured by IGM Resins B.V).

Examples of the thioxanthone compound include thioxanthone, 2-isopropylthioxanthone, 4-isopropylthioxanthone, 2-chlorothioxanthone, 2,4-dichlorothioxanthone, 2-dodecylthioxanthone, 2,4-diethylthioxanthone, 2,4-dimethylthioxanthone, 1-methoxycarbonylthioxanthone, 2-ethoxycarbonylthioxanthone, 3-(2-methoxyethoxycarbonyl) thioxanthone, 4-butoxycarbonylthioxanthone, 3-butoxycarbonyl-7-methylthioxanthone, 1-cyano-3-chlorothioxanthone, 1-ethoxycarbonyl-3-chlorothioxanthone, 1-ethoxycarbonyl-3-ethoxythioxanthone, 1-ethoxycarbonyl-3-aminthioxanthone, 1-ethoxycarbonyl-3-phenylsulfurylthioxanthone,Examples thereof include 3,4-di[2-(2-methoxyethoxy)ethoxycarbonyl]thioxanthone, 1-ethoxycarbonyl-3-(1-methyl-1-morpholinoethyl)thioxanthone, 2-methyl-6-dimethoxymethylthioxanthone, 2-methyl-6-(1,1-dimethoxybenzyl)thioxanthone, 2-morpholinomethylthioxanthone, 2-methyl-6-morpholinomethylthioxanthone, n-allylthioxanthone-3,4-dicarboxylimide, n-octylthioxanthone-3,4-dicarboxylimide, N-(1,1,3,3-tetramethylbutyl)thioxanthone-3,4-dicarboxylimide, 1-phenoxythioxanthone, 6-ethoxycarbonyl-2-methoxythioxanthone, 6-ethoxycarbonyl-2-methylthioxanthone, thioxanthone-2-polyethylene glycol ester, and 2-hydroxy-3-(3,4-dimethyl-9-oxo-9H-thioxanthone-2-yl)oxy-N,N,N-trimethyl-1-propanaminium chloride.

The thioxanthone compound may be a commercially available product. Examples of the commercially available product include SPEEDCURE series (for example, SPEEDCURE 7010, SPEEDCURE CPTX, SPEEDCURE ITX, and the like) manufactured by Lambson.

In a case where the ink contains a polymerization initiator, from the viewpoint of improving the curing properties of the ink, a content of the polymerization initiator is preferably 2% by mass or more and more preferably 5% by mass or more with respect to the total amount of the ink. The upper limit of the content of the polymerization initiator is not particularly limited, but for example, it is 10% by mass.

Surfactant

The ink may contain at least one surfactant.

However, from the viewpoint of improving the affinity between the base material for image recording and the ink, it is preferable that the ink does not contain a surfactant, or a content of the surfactant with respect to the total amount of the ink is less than 0.1% by mass. In a case where the ink contains a surfactant, as the surfactant, a generally known surfactant can be used.

Polymerization Inhibitor

The ink according to the present disclosure preferably contains at least one polymerization inhibitor.
Examples of the polymerization inhibitor include p-methoxyphenol, quinones (for example, hydroquinone, benzoquinone, and methoxybenzoquinone), phenothiazine, catechols, alkylphenols (for example, dibutyl hydroxy toluene (BHT)), alkyl bisphenols, zinc dimethyldithiocarbamate, copper dimethyldithiocarbamate, copper dibutyldithiocarbamate, copper salicylate, thiodipropionic acid esters, mercaptobenzimidazole, phosphites, 2,2,6,6-tetramethylpiperidine-1-oxyl (TEMPO), 2,2,6,6-tetramethyl-4-hydroxypiperidine-1-oxyl (TEMPOL), and tris(N-nitroso-N-phenylhydroxylamine)aluminum salt (also known as Cupferron Al).
Among these, as the polymerization inhibitor, it is preferable to include at least one selected from the group consisting of p-methoxyphenol, catechols, quinones, alkylphenols, TEMPO, TEMPOL, and tris(N-nitroso-N-phenylhydroxylamine)aluminum salt; and it is more preferable to include at least one selected from the group consisting of p-methoxyphenol, hydroquinone, benzoquinone, BHT, TEMPO, TEMPOL, and tris(N-nitroso-N-phenylhydroxylamine) aluminum salt.
In a case where the ink contains a polymerization inhibitor, a content of the polymerization inhibitor is preferably 0.01% by mass to 2.0% by mass, more preferably 0.02% by mass to 1.0% by mass, and still more preferably 0.03% by mass to 0.5% by mass with respect to the total amount of the ink.

Water

The ink may contain a small amount of water.
Specifically, a content of water with respect to the total amount of the ink is preferably 3% by mass or less, more preferably 2% by mass or less, and still more preferably 1% by mass or less.
The ink is preferably a non-aqueous ink which substantially does not contain water.

Colorant

The ink preferably contains at least one colorant.
The colorant is not particularly limited, and can be optionally selected from known coloring materials such as a pigment, a water-soluble dye, and a dispersed dye. Among these, from the viewpoint of excellent weather fastness and rich color reproducibility, the colorant is preferably a pigment.
The type of the pigment is not particularly limited, and any of an organic pigment or an inorganic pigment may be used.
Examples of the pigment include pigments described in "Encyclopedia of Pigments" edited by Seishiro Ito (2000), "Industrial Organic Pigments", W. Herbst, K. Hunger, JP2002-12607A, JP2002-188025A, JP2003-26978A, and JP2003-342503A.
In a case where the ink contains a pigment as the colorant, the ink may contain a dispersant as necessary.
For the colorant such as a pigment and the pigment dispersant, known documents such as paragraphs 0152 to 0158 of JP2011-225848A and paragraphs 0132 to 0149 of JP2009-209352A can be appropriately referred to.
In a case where the ink contains a colorant, a content of the colorant is preferably 0.1% by mass to 20% by mass and more preferably 0.5% by mass to 10% by mass with respect to the total amount of the ink.

Other components

The ink may contain a component other than those described above.
Examples of the other components include an ultraviolet absorber, a co-sensitizer, an antioxidant, a fading inhibitor, and a conductive salt.
With regard to the other components, reference can be appropriately made to known documents, for example, JP2011-225848A, JP2009-209352A, and the like.

Physical Properties of Ink

From the viewpoint of jettability, a viscosity of the ink is preferably 5 mPa·s to 50 mPa s, more preferably 10 mPa s to 30 mPa s, and still more preferably 10 mPa s to 25 mPa s.

The viscosity means a value measured at 25°C.

The viscosity is a value measured using a viscometer, and can be measured using, for example, VISCOMETER

RE-85L (manufactured by TOKI SANGYO CO., LTD.).

From the viewpoint of jettability, a surface tension of the ink is preferably 60 mN/m or less, more preferably 20 mN/m to 50 mN/m, and still more preferably 25 mN/m to 45 mN/m.

The surface tension means a value measured at 25°C.

The surface tension is a value measured using a surface tensiometer, and can be measured using, for example, product name "Automatic Surface Tentiometer CBVP-Z (manufactured by Kyowa Interface Science Co., Ltd.)".

Image recording method

The image recording method according to the present disclosure includes a step of applying the ink according to the present disclosure onto a base material for image recording, containing a polymer including vinyl chloride as a constitutional unit, by an ink jet recording method to record an image (hereinafter, also referred to as "image recording step").

Base material for image recording

The base material for image recording contains a polymer including vinyl chloride as a constitutional unit.

The polymer including vinyl chloride as a constitutional unit may be a homopolymer of vinyl chloride (that is, polyvinyl chloride), or may be a copolymer including vinyl chloride and a monomer other than the vinyl chloride as a constitutional unit.

Examples of the copolymer including vinyl chloride and a monomer other than the vinyl chloride as a constitutional unit include a vinyl chloride-urethane copolymer, a vinyl chloride-ethylene copolymer, a vinyl chloride-vinyl acetate copolymer, a vinyl chloride-vinyl acetate-maleic acid copolymer, a vinyl chloride-vinyl acetate-vinyl alcohol copolymer, and a vinyl chloride-ethylene-vinyl acetate copolymer.

Among these, the base material for image recording preferably contains polyvinyl chloride.

The base material for image recording may contain a component other than the polymer including vinyl chloride as a constitutional unit. Examples of other components include a plasticizer, a stabilizer, an antioxidant, an ultraviolet absorbing agent, a binder resin, and a white pigment.

The base material for image recording may include a layer containing the polymer including vinyl chloride as a constitutional unit and a surface-treated layer, but from the viewpoint of obtaining the adhesiveness between the base material for image recording and the image by dissolving the ink in the base material for image recording, it is preferable that the base material for image recording does not include the surface-treated layer. That is, the surface of the base material for image recording to be applied with the ink preferably contains the polymer including vinyl chloride as a constitutional unit.

A thickness of the base material for image recording is not particularly limited, but is, for example, preferably 0.1 μm to 1,000 μm, more preferably 0.1 μm to 800 μm, and still more preferably 1 μm to 500 μm.

Ink application method

The ink is applied by an inkjet recording method.

The ejection method of the ink by the ink jet recording method is not particularly limited, and for example, any known methods such as an electric charge control method of jetting the ink using electrostatic attraction force, a drop-on-demand method (pressure pulse method) using vibration pressure of a piezoelectric element, an acoustic inkjet method of converting an electric signal into an acoustic beam, irradiating the ink with the acoustic beam, and jetting the ink by using radiation pressure, a thermal ink jet method (BUBBLE JET (registered trademark)) of heating the ink, forming bubbles, and using generated pressure, and the like may be used.

As the ink jet recording method, particularly, it is possible to effectively use the method described in JP1979-59936A (JP-S54-59936A), which is an inkjet recording method of causing an ink to experience a rapid volume change by the action of thermal energy and jetting the ink from a nozzle by using the acting force resulting from the change of state. As the ink jet recording method, a method described in paragraphs 0093 to 0105 of JP2003-306623A can also be applied.

The application of the ink onto the base material for image recording by the ink jet recording method can be performed by allowing the ink to be jetted from a nozzle of an ink jet head.

The way of using the inkjet head also includes a shuttle method of performing recording while a short serial head is allowed to scan in the width direction of the recorded medium, and a line method of using a line head in which recording elements are arranged correspondingly to the entire range of one side of the recorded medium.

In the line method, image recording can be performed on the entire surface of the recorded medium by scanning the recorded medium in a direction intersecting the direction in which the recording elements are aligned. In the line method, a transport system such as a carriage that allows the short head to perform scanning in the shuttle method is unnecessary. In addition, in the line method, as compared with the shuttle method, a carriage is not required to move, and a complicated scanning control with the recorded medium is unnecessary, and only the recorded medium moves. Therefore, according to the line method, an increase in the recording speed of an image is achieved as compared with the shuttle method.

The ink is preferably applied using an inkjet head having a resolution of 300 dpi or more (more preferably 600 dpi or more and still more preferably 800 dpi or more). Herein, dpi is an abbreviation for dot per inch, and 1 inch is 2.54 cm.

From the viewpoint of obtaining a high-definition image, the amount of liquid droplets of the ink jetted from nozzles of the ink jet head is preferably 1 picoliter (pL) to 10 pL and more preferably 1.5 pL to 6 pL.

Drying step

The image recording step preferably includes a step of drying the applied ink after the ink is applied onto the base material for image recording (hereinafter, also referred to as "drying step").

The ink may be dried by natural drying, but is preferably dried by heating.

A heating temperature in the heating drying is preferably 30°C to 90°C and more preferably 50°C to 80°C.

Examples of the method of the heating drying include a method using infrared (IR) drying, hot air drying, and heating and drying using a heating device (for example, a heater, a hot plate, a heating furnace, or the like).

The heating drying can be performed by heating the ink from at least one of an image-recorded surface side or an image non-recorded surface side of the base material for image recording.

Active energy ray irradiating step

The image recording step preferably includes a step of applying the ink onto the base material for image recording and then irradiating the applied ink with active energy ray (hereinafter, also referred to as "active energy ray irradiating step").

By irradiating the ink applied onto the base material for image recording with active energy ray, a polymerization reaction of the polymerizable compound contained in the ink proceeds. As a result, the image can be fixed, and a hardness or the like of the image can be improved.

Examples of the active energy ray include ultraviolet rays, visible rays, and electron beams. Among these, ultraviolet rays are preferable as the active energy ray.

A peak wavelength of the ultraviolet rays is preferably 200 nm to 405 nm, more preferably 220 nm to 390 nm, and still more preferably 220 nm to 380 nm.

The exposure amount of ultraviolet rays is preferably 20 $mJ/cm^2$ to 5 $J/cm^2$ and more preferably 100 $mJ/cm^2$ to 1,500 $mJ/cm^2$. As irradiation conditions and basic irradiation method, irradiation conditions and irradiation method described in JP1985-132767A (JP-S60-132767A) can be adopted. Specifically, the irradiation method is preferably a method of providing a light source on both sides of a head unit including an ink jet device and scanning the substrate by the head unit and the light source by a so-called shuttle method, or a method of irradiating the substrate with another light source that is not involved in driving.

As a light source for the ultraviolet irradiation, a discharge lamp or a laser light source (such as a gas laser and a solid-state laser) is mainly used, and as the discharge lamp, for example, a mercury lamp, a metal halide lamp, and an ultraviolet fluorescent lamp are widely known. In addition, a semiconductor light source such as ultraviolet light emitting diode (UV-LED) and ultraviolet laser diode (UV-LD) is expected as the light source for the ultraviolet irradiation because it is compact, has long service life and high efficiency, and is inexpensive. Among these, a metal halide lamp, a high-pressure mercury lamp, a medium-pressure mercury lamp, a low-pressure mercury lamp, or UV-LED is preferable as the light source for the ultraviolet irradiation.

Manufacturing method of laminate

The manufacturing method of a laminate of the present disclosure includes a step of applying the ink according to the present disclosure onto a base material for image recording, containing a polymer including vinyl chloride as a constitutional unit, by an ink jet recording method to record an image (that is, an image recording step), and a step of disposing a base material for lamination, containing a polymer including vinyl chloride as a constitutional unit, on the image for lamination (hereinafter, referred to as "laminating step").

The image recording step in the manufacturing method of a laminate according to the present disclosure is the same as the image recording step in the image recording method described above, and the description thereof will be

omitted.

Base material for lamination

A preferred aspect of the base material for lamination is the same as the preferred aspect of the base material for image recording, and the description thereof will be omitted.

Lamination method

In the laminating step, the base material for lamination is disposed on the image. In this case, other layers such as an adhesive layer may be provided on the image, and the base material for lamination may be disposed through the other layers. However, in the manufacturing method of a laminate according to the present disclosure, the ink film (that is, the image) obtained by curing the ink has excellent thermal plasticity, and thus it is preferable that the other layers are not disposed. That is, it is preferable that the image and the base material for lamination are overlapped with each other so as to be in contact with each other and laminated. As a result, a laminate having a laminated structure of base material for image recording/image/base material for lamination is obtained.

From the viewpoint of suppressing thermal decomposition, the upper limit value of the temperature in a case of performing the thermocompression bonding is preferably 200°C, more preferably 160°C, and still more preferably 140°C.

The temperature during the thermocompression bonding means a surface temperature of the base material for lamination.

A pressure during the thermocompression bonding is preferably 0.1 MPa to 20 MPa and more preferably 0.5 MPa to 15 MPa.

A time for the thermocompression bonding is, for example, 10 seconds to 500 seconds.

The thermocompression bonding may be performed in two stages. For example, a pressure at the first stage may be set to 0.5 MPa to 5 MPa, and a pressure at the second stage may be set to 6 MPa to 15 MPa, which is higher than the pressure at the first stage.

The laminate obtained by the manufacturing method of a laminate according to the present disclosure can be used, for example, as a floor material or a wall material of a transportation device (railway, bus, or the like), or a floor material or a wall material of a building. Examples

Hereinafter, the present disclosure will be described in more detail using Examples. However, the present disclosure is not limited to the following examples as long as it does not exceed the gist of the present invention.

Examples 1 to 15 and Comparative Examples 1 and 2

Synthesis of acrylic resin

n-butanol (137.6 g) and N-vinyl-ε-caprolactam (50.0 g) were weighed and charged into a 500 ml three-neck flask equipped with a cooling pipe, and the mixture was heated and stirred at 75°C under a nitrogen stream. Separately, a mixed solution prepared by mixing n-butanol (91.7 g), tetrahydrofurfuryl acrylate (30.0 g), X-22-174ASX (manufactured by Shin-Etsu Chemical Co., Ltd.) (20.0 g), and V-601 (dimethyl 2,2'-azobis(isobutyronitrile); polymerization initiator manufactured by FUJIFILM Wako Pure Chemical Corporation) (4.0 g) was added dropwise to the above-described flask over 3 hours. After the dropwise addition was completed, the mixture was further stirred at 85°C for 3 hours to perform a reaction. The reaction solution was allowed to cool to room temperature (25°C; the same applies hereinafter), methanol (170.6 g) was added thereto and stirred, the obtained mixed solution was added dropwise to a mixed solution of methanol (300.0 g) and water (3,000 g), and separated components were dried to obtain a white solid of an acrylic resin P 1.

A weight-average molecular weight (Mw) of the acrylic resin P1 was 20,000.

In Example 1, the acrylic resin P1 was used. Acrylic resins were synthesized in the same manner as in Example 1, except that, in Examples 2 to 15 and Comparative Examples 1 and 2, the polymerizable compound A, the polymerizable compound B, and other polymerizable compounds shown in Table 7 were used, the amount of raw materials was adjusted to be a compositional ratio shown in Table 7, and the amount of the polymerization initiator was changed for adjusting the molecular weight.

Details of the polymerizable compound A, the polymerizable compound B, and other polymerizable compounds are as follows.

Polymerizable compound A

· Silicone 1: methacrylate including a polysiloxane group (product name "X-22-174ASX", manufactured by Shin-Etsu

Chemical Co., Ltd.)
· Silicone 2: polymethacrylate including a polysiloxane group (product name "X-22-2404", manufactured by Shin-Etsu Chemical Co., Ltd.)
· Silicone 3: methacrylate including a polysiloxane group (product name "KF-2012", manufactured by Shin-Etsu Chemical Co., Ltd.)
· Silicone 4: methacrylate including a polysiloxane group (product name "X-22-2426", manufactured by Shin-Etsu Chemical Co., Ltd.)
· Fluorine 1: 1H,1H,2H,2H-tridecafluorooctyl acrylate (product name "VISCOAT 13F", manufactured by Osaka Organic Chemical Industry Ltd.)
· C18MA: stearyl methacrylate

Polymerizable compound B

· NVC: N-vinyl-ε-caprolactam
· THFA: tetrahydrofurfuryl acrylate
· ACMO: 4-acryloylmorpholine
· MMA: methyl methacrylate
· HPMAA: N-(2-hydroxypropyl) methacrylamide
· HEMA: 2-hydroxyethyl methacrylate

Other polymerizable compounds

· BA: butyl acrylate
· IBOMA: isobomyl methacrylate

Preparation of cyan pigment dispersion liquid

The following components were mixed together and stirred at 2,500 rpm for 10 minutes using a mixer (L4R manufactured by Silverson Machines, Inc.) to obtain a mixture. Thereafter, the obtained mixture was put into a beads mill disperser DISPERMAT LS (manufactured by VMA-GETZMANN GMBH), and using a YTZ ball (manufactured by Nikkato Corporation) having a diameter of 0.65 mm, the mixture was dispersed at 2,500 rpm for 6 hours to obtain a cyan pigment dispersion liquid.

· Cyan pigment: product name "IRGALITE BLUE GLVO", manufactured by BASF SE ... 30% by mass
· BYK-168: product name "DISPERSE BYK-168", manufactured by BYK-Chemie GmbH... 20% by mass
· DVE-3: triethylene glycol divinyl ether, manufactured by BASF SE ... 50% by mass

Preparation of ink

The above-described cyan pigment dispersion liquid (6% by mass) and the following components were mixed to prepare an ink.

· CHA: cyclohexyl acrylate, manufactured by TOKYO CHEMICAL INDUSTRY CO., LTD.... 42.6% by mass
· EOEOEA: ethoxydiethylene glycol acrylate, manufactured by TOKYO CHEMICAL INDUSTRY CO., LTD.... 17.0% by mass
· NVC: N-vinylcaprolactam, manufactured by TOKYO CHEMICAL INDUSTRY CO., LTD.... 25.5% by mass
· ITX: 2-isopropylthioxanthone, manufactured by FUJIFILM Wako Pure Chemical Corporation ... 2% by mass
· Omni. 819: bis(2,4,6-trimethylbenzoyl)phenylphosphine oxide (product name "Omnirad 819", manufactured by IGM Resins B.V) ... 2.8% by mass
· Omni. TPO-H: 2,4,6-trimethylbenzoyldiphenylphosphine oxide (product name "Omnirad TPO-H", manufactured by IGM Resins B.V) ... 2.8% by mass
· TEMPOL: 4-hydroxy-2,2,6,6-tetramethylpiperidine-1-oxyl, manufactured by TOKYO CHEMICAL INDUSTRY CO., LTD.... 0.3% by mass
· Acrylic resin shown in Table 7 ... 1% by mass

Production of laminate

Image recording step

As a base material for image recording, a polyvinyl chloride base material (product name "PVC35phr", manufactured by OKAMOTO INDUSTRIES, INC.) was prepared.

A rubber heater (SR100 manufactured by Three High Co., Ltd.) and an ultraviolet (UV) irradiation device (Vzero manufactured by Integration Technology Ltd.) were attached to an ink jet printer (KEGON) manufactured by Affinity Co., Ltd. to prepare an ink jet printer modification machine. An output of the rubber heater was set such that the base material for image recording, on which the ink had been applied, could be heated to approximately 60°C. A drying time of the ink in a case of performing the UV irradiation (that is, a time from landing of the ink jetted from the ink jet head on the base material for image recording to the UV irradiation) was adjusted to 10 seconds. Specifically, the drying time of the ink was adjusted by a transportation speed (5 m/min to 25 m/min) and the timing of opening and closing an UV shutter.

The above-described ink was jetted from the ink jet head of the ink jet printer modification machine to record a solid image on the base material for image recording, thereby obtaining an image recorded material. A resolution was set to 1,200 dots per inch (dpi) $\times$ 600 dpi.

Laminating step

As a base material for lamination, a polyvinyl chloride base material (product name "SG800", manufactured by K&H Trading Co., Ltd., thickness: 75 $\mu$m) was used.

The base material for lamination was disposed on the image recorded on the base material for image recording. The image and the base material for lamination were thermocompression-bonded using a desktop automatic transfer press machine (product name "AF-54TEN", Asahi Seisakusho Ltd.). As a result, a laminate having a laminated structure of base material for image recording/image/base material for lamination was obtained.

A temperature in the thermocompression bonding was set to 130°C. The thermocompression bonding was performed for 300 seconds at a pressure of 2 MPa.

Measurement of peel strength

A peel strength was measured using an evaluation sample of the laminate. The measuring method is as follows.

The evaluation sample was produced by the following method.

An image recording sample of 3.2 cm $\times$ 3.2 cm was cut out from the image recorded material obtained in the image recording step. In addition, a base material sample for lamination, having a size of 3.2 cm $\times$ 3.2 cm, was cut out from the base material for lamination.

A polyethylene terephthalate (PET) sheet having a thickness of 12 $\mu$m was disposed on the image-recorded surface of the image recording sample in a region of 1.0 cm $\times$ 3.2 cm including one side of the image recording sample. Next, a base material sample for lamination, having a size of 3.2 cm $\times$ 3.2 cm, was superimposed on the entire image-recorded surface of the image recording sample, the region (region of 1.0 cm $\times$ 3.2 cm) where the PET sheet had been disposed, and the region (region of 2.2 cm $\times$ 3.2 cm) where the PET sheet was not disposed.

In this state, the image recording sample and the base material sample for lamination were laminated under the same conditions as in the above-described laminating step. An evaluation sample was obtained by removing the PET sheet from the obtained laminate.

In the evaluation sample, the region where the PET sheet was not disposed before the laminating step was adhered to the image recording sample and the base material sample for lamination. On the other hand, in the evaluation sample, the region where the PET sheet had been disposed before the laminating step was not adhered to the image recording sample and the base material sample for lamination.

Next, in the region where the image-recording sample and the base material sample for lamination were not adhered, a peeling strength was measured by performing a tensile test of pulling the image recording sample and the base material sample for lamination in opposite directions. The tensile test was carried out using a tensile tester (product name "Autograph AGS-X 5KN", manufactured by Shimadzu Corporation). Two evaluation samples were produced, and a tensile test was performed twice. An average value of the two peel strengths was adopted. The evaluation standard was as follows.

5: peel strength was 4 N/cm or more.
4: peel strength was 3 N/cm or more and less than 4 N/cm.

3: peel strength was 2 N/cm or more and less than 3 N/cm.
2: peel strength was 1 N/cm or more and less than 2 N/cm.
1: peel strength was 0.1 N/cm or more and less than 1 N/cm.

Evaluation of blocking resistance

An image recording sample of 2.2 cm × 2.2 cm was cut out from the image recorded material obtained in the image recording step, both surfaces were sandwiched between polyvinyl chloride base materials of 2.2 cm × 2.2 cm, and both surfaces were further sandwiched between aluminum plates and acrylic plates. A weight of 2 kg was placed on an upper portion of the obtained laminate, and the laminate was allowed to stand at 70°C for 24 hours. A transferred area ratio at which the ink image was transferred to the polyvinyl chloride base material was calculated. The evaluation standard was as follows.

5: ink transfer rate was less than 5%.
4: ink transfer rate was 5% or more and less than 10%.
3: ink transfer rate was 10% or more and less than 20%.
2: ink transfer rate was 20% or more and less than 40%.
1: ink transfer rate was 40% or more.

The evaluation results are shown in Table 7.

Table 7

| | Polymerizable compound constituting acrylic resin | | | | | | | | | Compositional ratio | | | | Mw | Constitutional unit A/constitutional unit B | Tg (°C) | Evaluation | |
|---|---|---|---|---|---|---|---|---|---|---|---|---|---|---|---|---|---|---|
| | Monomer 1 | | Monomer 2 | | | Monomer 3 | | | Monomer 4 | Constitutional unit A | Constitutional unit B | | Other constitutional units | | | | Peel strength | Blocking resistance |
| | Type | Mn | Type | δP | δH | Type | δP | δH | Type | Monomer 1 | Monomer 2 | Monomer 3 | Monomer 4 | | | | | |
| Example 1 | Silicone 1 | 900 | NVC | 5.6 | 5.3 | THFA | 5.6 | 5.9 | - | 0.5 | 60 | 39.5 | - | 20000 | 0.005 | 59 | 3 | 2 |
| Example 2 | Silicone 1 | 900 | NVC | 5.6 | 5.3 | THFA | 5.6 | 5.9 | - | 1 | 60 | 39 | - | 22000 | 0.01 | 37 | 4 | 2 |
| Example 3 | Silicone 1 | 900 | NVC | 5.6 | 5.3 | THFA | 5.6 | 5.9 | - | 10 | 60 | 30 | - | 22000 | 0.11 | 37 | 5 | 5 |
| Example 4 | Silicone 1 | 900 | NVC | 5.6 | 5.3 | THFA | 5.6 | 5.9 | BA | 30 | 20 | 30 | 20 | 23000 | 0.60 | 3 | 4 | 5 |
| Example 5 | Silicone 1 | 900 | NVC | 5.6 | 5.3 | THFA | 5.6 | 5.9 | - | 40 | 30 | 30 | - | 24000 | 0.67 | 5 | 3 | 5 |
| Example 6 | Silicone 1 | 900 | NVC | 5.6 | 5.3 | ACMO | 11 | 5.8 | IBOMA | 10 | 10 | 60 | 20 | 20000 | 0.14 | 140 | 4 | 5 |
| Example 7 | Silicone 1 | 900 | NVC | 5.6 | 5.3 | ACMO | 11 | 5.8 | IBOMA | 10 | 10 | 30 | 50 | 20000 | 0.25 | 161 | 3 | 5 |
| Example 8 | Fluorine 1 | 418 | NVC | 5.6 | 5.3 | THFA | 5.6 | 5.9 | - | 10 | 60 | 30 | - | 20000 | 0.11 | 62 | 5 | 4 |
| Example 9 | C18MA | 339 | NVC | 5.6 | 5.3 | THFA | 5.6 | 5.9 | - | 10 | 60 | 30 | - | 14000 | 0.11 | 88 | 3 | 3 |
| Example 10 | Silicone 2 | 420 | NVC | 5.6 | 5.3 | THFA | 5.6 | 5.9 | - | 10 | 60 | 30 | - | 16000 | 0.11 | 73 | 5 | 5 |
| Example 11 | Silicone 3 | 4600 | NVC | 5.6 | 5.3 | THFA | 5.6 | 5.9 | - | 10 | 60 | 30 | - | 24000 | 0.11 | 77 | 4 | 5 |
| Example 12 | Silicone 4 | 12000 | NVC | 5.6 | 5.3 | THFA | 5.6 | 5.9 | - | 10 | 60 | 30 | - | 28000 | 0.11 | 95 | 3 | 5 |
| Example 13 | Silicone 1 | 900 | MMA | 5.6 | 6.6 | - | - | - | - | 10 | 90 | - | - | 20000 | 0.11 | 90 | 3 | 5 |
| Example 14 | Silicone 1 | 900 | HPMAA | 10 | 11 | - | - | - | - | 10 | 90 | - | - | 20000 | 0.11 | 92 | 4 | 5 |
| Example 15 | Silicone 1 | 900 | HEMA | 7.3 | 12 | - | - | - | - | 10 | 90 | - | - | 20000 | 0.11 | 48 | 3 | 5 |
| Comparative Example 1 | Silicone 1 | 900 | NVC | 5.6 | 5.3 | - | - | - | BA | 10 | 10 | - | 80 | 20000 | 1.00 | -40 | 1 | 1 |
| Comparative Example 2 | Silicone 1 | 900 | NVC | 5.6 | 5.3 | THFA | 5.6 | 5.9 | - | 45 | 25 | 30 | - | 20000 | - | -2 | 1 | 5 |

As shown in Table 7, in Examples 1 to 15, it was found that, since the active energy ray-curable ink jet ink

contained the acrylic resin which contained the constitutional unit A derived from the polymerizable compound A including at least one selected from the group consisting of a fluorinated hydrocarbon group, a polysiloxane group, and a hydrocarbon group having 12 or more carbon atoms, and contained the constitutional unit B derived from the polymerizable compound B having a polarity element of an HSP value of 4.8 $MPa^{1/2}$ or more, and the polymerizable monomer, in which the content of the constitutional unit A was 40% by mass or less with respect to the total amount of the acrylic resin, and the content of the constitutional unit B was 15% by mass or more with respect to the total amount of the acrylic resin, the adhesiveness to the base material for lamination was excellent.

On the other hand, in Comparative Example 1, it was found that, since the content of the constitutional unit B was less than 15% by mass, and the adhesiveness to the base material for lamination was deteriorated.

In Comparative Example 2, it was found that, since the content of the constitutional unit A was more than 40% by mass, the adhesiveness to the base material for lamination was deteriorated.

In Example 6, it was found that the glass transition temperature of the acrylic resin was 150°C or lower, and the adhesiveness to the base material for lamination was more excellent as compared with Example 7.

In Example 8, it was found that, since the polymerizable compound A was a polymerizable compound including at least one selected from the group consisting of a fluorinated hydrocarbon group and a polysiloxane group, the adhesiveness to the base material for lamination was more excellent and the blocking resistance was more excellent as compared with Example 9.

In Example 11, it was found that, since the number-average molecular weight of the polymerizable compound A was 5,000 or less, the adhesiveness to the base material for lamination was more excellent as compared with Example 12.

In Example 2, it was found that, since the mass ratio of the constitutional unit A to the constitutional unit B was 0.01 or more, the adhesiveness to the base material for lamination was more excellent as compared with Example 1. In Example 4, it was found that, since the mass ratio of the constitutional unit A to the constitutional unit B was 0.65 or less, the adhesiveness to the base material for lamination was more excellent as compared with Example 5.

In Example 14, it was found that, since the hydrogen bond element of the HSP value of the polymerizable compound B was 11.0 $MPa^{1/2}$ or less, the adhesiveness to the base material for lamination was more excellent as compared with Example 15.

In Example 14, it was found that, since the constitutional unit B was at least one constitutional unit selected from the group consisting of Formulae (1) to (5), the adhesiveness to the base material for lamination was more excellent as compared with Example 13.

Examples 16 to 29

Acrylic resins were synthesized in the same manner as in Example 1, except that the polymerizable compound A, the polymerizable compound B, and other polymerizable compounds shown in Table 8 were used, the amount of raw materials was adjusted to be a compositional ratio shown in Table 8, and the amount of the polymerization initiator was changed for adjusting the molecular weight.

Details of the polymerizable compound B not used in Examples 1 to 15 are as follows.

Polymerizable compound B

- NVP: N-vinylpyrrolidone
- THFM: tetrahydrofurfuryl methacrylate
- ACMO: 4-acryloylmorpholine
- VMOX: 5-methyl-3-vinyloxazolidin-2-one

An ink was prepared and a laminate was produced by the same methods as in Example 1.

Using the obtained laminate, the peel strength was measured by the same method as in Example 1.

With regard to the blocking resistance, the blocking resistance was evaluated by the following method as a more severe condition than the evaluation method of the blocking resistance.

Evaluation of blocking resistance 2

An image recording sample of 2.2 cm × 2.2 cm was cut out from the image recorded material obtained in the image recording step, both surfaces were sandwiched between polyvinyl chloride base materials of 2.2 cm × 2.2 cm, and both surfaces were further sandwiched between aluminum plates and acrylic plates. A weight of 2 kg was placed on an upper portion of the obtained laminate, and the laminate was allowed to stand at 70°C for 72 hours. A transferred area ratio

at which the ink image was transferred to the polyvinyl chloride base material was calculated. The evaluation standard was as follows.

5: ink transfer rate was less than 5%.
4: ink transfer rate was 5% or more and less than 10%.
3: ink transfer rate was 10% or more and less than 20%.
2: ink transfer rate was 20% or more and less than 40%.
1: ink transfer rate was 40% or more.

The evaluation results are shown in Table 8.

Table 8

| | Polymerizable compound constituting acrylic resin | | | | | | | | | Compositional ratio | | | | | Constitutional unit B1/constitutional unit B2 | Mw | Constitutional unit A/constitutional unit B | Tg (°C) | Evaluation | |
|---|---|---|---|---|---|---|---|---|---|---|---|---|---|---|---|---|---|---|---|---|
| | Monomer 1 | | Monomer 2 | | | Monomer 3 | | | Monomer 4 | Constitutional unit A | Constitutional unit B1 | | Constitutional unit B2 | Other constitutional units | | | | | Peel strength | Blocking resistance |
| | Type | Mn | Type | δP | δH | Type | δP | δH | Type | Monomer 1 | Monomer 2 | Monomer 3 | | Monomer 4 | | | | | | |
| Example 3 | Silicone 1 | 900 | NVC | 5.6 | 5.3 | THFA | 5.6 | 5.9 | - | 10 | 60 | 30 | - | - | - | 22000 | 0.11 | 5 | 5 | 2 |
| Example 16 | Silicone 1 | 900 | NVC | 5.6 | 5.3 | HEMA | 7.3 | 12 | - | 10 | 85 | - | 5 | - | 17.0 | 8000 | 0.11 | 65 | 5 | 5 |
| Example 17 | Silicone 1 | 900 | NVC | 5.6 | 5.3 | HEMA | 7.3 | 12 | - | 10 | 70 | - | 20 | - | 3.5 | 13000 | 0.11 | 62 | 5 | 5 |
| Example 18 | Silicone 1 | 900 | NVC | 5.6 | 5.3 | HEMA | 7.3 | 12 | - | 10 | 60 | - | 30 | - | 2.0 | 22000 | 0.11 | 61 | 5 | 5 |
| Example 19 | Silicone 1 | 900 | NVC | 5.6 | 5.3 | HEMA | 7.3 | 12 | - | 20 | 50 | - | 30 | - | 1.7 | 32000 | 0.25 | 47 | 4 | 5 |
| Example 20 | Silicone 1 | 900 | NVC | 5.6 | 5.3 | HEMA | 7.3 | 12 | - | 10 | 50 | - | 40 | - | 1.3 | 16000 | 0.11 | 57 | 4 | 5 |
| Example 21 | Silicone 1 | 900 | NVC | 5.6 | 5.3 | HEMA | 7.3 | 12 | IBOMA | 10 | 40 | - | 30 | 20 | 1.3 | 40000 | 0.14 | 102 | 3 | 5 |
| Example 22 | Silicone 1 | 420 | NVC | 5.6 | 5.3 | HEMA | 7.3 | 12 | - | 20 | 50 | - | 30 | | 1.7 | 28000 | 0.25 | 59 | 4 | 5 |
| Example 23 | Silicone 1 | 900 | NVP | 8.4 | 6.3 | HEMA | 7.3 | 12 | - | 10 | 70 | - | 20 | - | 3.5 | 16000 | 0.11 | 108 | 4 | 5 |
| Example 24 | Silicone 1 | 900 | NVP | 8.4 | 6.3 | THFM | 5.1 | 5.5 | - | 10 | 60 | 30 | - | - | - | 23000 | 0.11 | 65 | 5 | 2 |
| Example 25 | Silicone 1 | 900 | VMOX | 8.7 | 6.6 | HEMA | 7.3 | 12 | - | 10 | 70 | - | 20 | - | 3.5 | 20000 | 0.11 | 103 | 4 | 5 |
| Example 26 | Silicone 1 | 900 | VMOX | 8.7 | 6.6 | THFA | 5.6 | 5.9 | - | 10 | 60 | 30 | - | - | - | 16000 | 0.11 | 62 | 5 | 2 |
| Example 27 | Silicone 1 | 900 | NVC | 5.6 | 5.3 | HEMA | 7.3 | 12 | - | 5 | 65 | - | 30 | - | 2.2 | 7900 | 0.05 | 66 | 5 | 5 |
| Example 28 | Silicone 1 | 900 | NVC | 5.6 | 5.3 | HEMA | 7.3 | 12 | - | 5 | 75 | - | 20 | - | 3.8 | 9800 | 0.05 | 68 | 5 | 5 |
| Example 29 | Silicone 1 | 900 | NVC | 5.6 | 5.3 | HEMA | 7.3 | 12 | - | 5 | 90 | - | 5 | - | 18 | 5600 | 0.05 | 72 | 5 | 4 |

As shown in Table 8, in Examples 16 to 29, it was found that, since the active energy ray-curable ink jet ink

contained the acrylic resin which contained the constitutional unit A derived from the polymerizable compound A including at least one selected from the group consisting of a fluorinated hydrocarbon group, a polysiloxane group, and a hydrocarbon group having 12 or more carbon atoms, and contained the constitutional unit B derived from the polymerizable compound B having a polarity element of an HSP value of 4.8 $MPa^{1/2}$ or more, and the polymerizable monomer, in which the content of the constitutional unit A was 40% by mass or less with respect to the total amount of the acrylic resin, and the content of the constitutional unit B was 15% by mass or more with respect to the total amount of the acrylic resin, the adhesiveness to the base material for lamination was excellent.

In particular, in Examples 16 to 18, it was found that, since the polymerizable compound B contained the polymerizable compound B1 in which the hydrogen bond element of the HSP value was 11.0 $MPa^{1/2}$ or less and the polymerizable compound B2 in which the hydrogen bond element of the HSP value was more than 11.0 $MPa^{1/2}$, the blocking resistance was significantly improved as compared with Example 3.

## Claims

**1.** An active energy ray-curable ink jet ink, comprising:

an acrylic resin that comprises a constitutional unit A derived from a polymerizable compound A including at least one selected from the group consisting of a fluorinated hydrocarbon group, a polysiloxane group, and a hydrocarbon group having 12 or more carbon atoms, and that comprises a constitutional unit B derived from a polymerizable compound B having a polar component of an HSP value of 4.8 $MPa^{1/2}$ or more; and
a polymerizable monomer,
wherein a content of the constitutional unit A is 40% by mass or less with respect to a total amount of the acrylic resin, and
a content of the constitutional unit B is 15% by mass or more with respect to the total amount of the acrylic resin.

**2.** The active energy ray-curable ink jet ink according to claim 1,
wherein a glass transition temperature of the acrylic resin is 150°C or lower.

**3.** The active energy ray-curable ink jet ink according to claim 1 or 2,
wherein the polymerizable compound A is a polymerizable compound including at least one selected from the group consisting of the fluorinated hydrocarbon group and the polysiloxane group.

**4.** The active energy ray-curable ink jet ink according to claim 1 or 2,
wherein a number-average molecular weight of the polymerizable compound A is 5,000 or less.

**5.** The active energy ray-curable ink jet ink according to claim 1 or 2,
wherein a mass ratio of the constitutional unit A to the constitutional unit B is from 0.01 to 0.65.

**6.** The active energy ray-curable ink jet ink according to claim 1 or 2,
wherein a hydrogen-bonding component of the HSP value of the polymerizable compound B is 11.0 $MPa^{1/2}$ or less.

**7.** The active energy ray-curable ink jet ink according to claim 1 or 2,
wherein the polymerizable compound B comprises a polymerizable compound B1 having a hydrogen-bonding component of the HSP value of 11.0 $MPa^{1/2}$ or less and a polymerizable compound B2 having a hydrogen-bonding component of the HSP value of more than 11.0 $MPa^{1/2}$.

**8.** The active energy ray-curable ink jet ink according to claim 7,
wherein a mass ratio of a content of the polymerizable compound B1 to a content of the polymerizable compound B2 is from 1 to 20.

**9.** The active energy ray-curable ink jet ink according to claim 1 or 2,

wherein the constitutional unit B is at least one constitutional unit selected from the group consisting of from following Formula (1) to Formula (5),

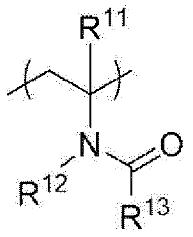 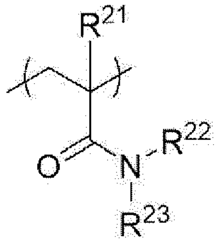 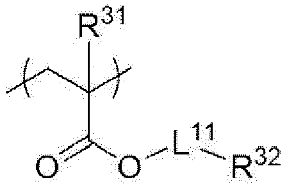 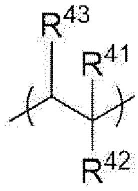 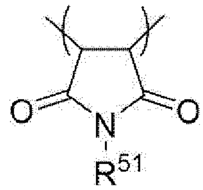

(1) (2) (3) (4) (5)

wherein, in Formula (1), $R^{11}$ represents a hydrogen atom or a hydrocarbon group, each of $R^{12}$ and $R^{13}$ independently represents a hydrocarbon group which may include an oxygen atom, or a hydrogen atom, and $R^{12}$ and $R^{13}$ may be bonded to each other to form a ring,
wherein, in Formula (2), $R^{21}$ represents a hydrogen atom or a hydrocarbon group, each of $R^{22}$ and $R^{23}$ independently represents a hydrocarbon group which may include an oxygen atom, or a hydrogen atom, and $R^{22}$ and $R^{23}$ may be bonded to each other to form a ring,
wherein, in Formula (3), $R^{31}$ represents a hydrogen atom or a hydrocarbon group, $L^{11}$ represents a single bond or a divalent linking group, and $R^{32}$ represents a hydrocarbon group including at least one selected from the group consisting of -O-, -S-, -C(=O)-, -NH-, and -N<,
wherein, in Formula (4), $R^{41}$ represents a hydrogen atom or a hydrocarbon group, each of $R^{42}$ and $R^{43}$ independently represents a hydrogen atom, a cyano group, a hydrocarbon group having a carbonyl group, a phosphoric acid ester group, or a monovalent heterocyclic group, and $R^{42}$ and $R^{43}$ may be bonded to each other to form a ring, and
wherein, in Formula (5), $R^{51}$ represents a hydrogen atom or a hydrocarbon group.

**10.** The active energy ray-curable ink jet ink according to claim 1 or 2,
wherein the polymerizable monomer comprises a polymerizable monomer C that has a (meth)acryloyl group and that has a solubility parameter of from 16.5 $MPa^{1/2}$ to 21.3 $MPa^{1/2}$.

**11.** The active energy ray-curable ink jet ink according to claim 10,
wherein a molecular weight of the polymerizable monomer C is 215 or less.

**12.** The active energy ray-curable ink jet ink according to claim 1 or 2,
wherein the polymerizable monomer comprises an N-vinyl compound.

**13.** The active energy ray-curable ink jet ink according to claim 1 or 2,
wherein a weighted average value of glass transition temperatures, in a case in which all polymerizable monomers in the active energy ray-curable inkjet ink are homopolymers, is from 0°C to 100°C.

**14.** An image recording method, comprising:
a step of applying the active energy ray-curable ink jet ink according to claim 1 or 2 onto a base material for image recording, which comprises a polymer including vinyl chloride as a constitutional unit, by an ink jet recording method to record an image.

**15.** A manufacturing method of a laminate, comprising:

a step of applying the active energy ray-curable inkjet ink according to claim 1 onto a base material for image recording, which comprises a polymer including vinyl chloride as a constitutional unit, by an ink jet recording method to record an image; and
a step of disposing a base material for lamination, which comprises a polymer including vinyl chloride as a constitutional unit, on the image, and laminating.

Europäisches Patentamt
European Patent Office
Office européen des brevets

# EUROPEAN SEARCH REPORT

Application Number
EP 24 18 3310

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2006 160973 A (KONICA MINOLTA MED & GRAPHIC) 22 June 2006 (2006-06-22) * abstract; claim 1; example 1 * | 1-15 | INV. C09D5/00 |
| X | JP 2016 176084 A (HITACHI MAXELL) 6 October 2016 (2016-10-06) * abstract; claim 1; example 1 * | 1-15 | |
| X | WO 2015/147177 A1 (TOYO INK SC HOLDINGS CO LTD [JP]; TOYO INK CO LTD [JP]) 1 October 2015 (2015-10-01) * abstract; claim 1; example 1 * | 1-15 | |
| X | JP 2014 019751 A (KONICA MINOLTA INC) 3 February 2014 (2014-02-03) * abstract; claim 1; example 1 * | 1-15 | |
| | | | TECHNICAL FIELDS SEARCHED (IPC) |
| | | | C09D |

The present search report has been drawn up for all claims

1

| Place of search | Date of completion of the search | Examiner |
|---|---|---|
| Munich | 26 February 2025 | Glomm, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 24 18 3310

This annex lists the patent family members relating to the patent documents cited in the above-mentioned European search report. The members are as contained in the European Patent Office EDP file on
The European Patent Office is in no way liable for these particulars which are merely given for the purpose of information.

26-02-2025

| Patent document cited in search report | Publication date | Patent family member(s) | Publication date |
|---|---|---|---|
| JP 2006160973 A | 22-06-2006 | NONE | |
| JP 2016176084 A | 06-10-2016 | JP 6144390 B2 | 07-06-2017 |
| | | JP 2016176084 A | 06-10-2016 |
| WO 2015147177 A1 | 01-10-2015 | CN 106133074 A | 16-11-2016 |
| | | EP 3124561 A1 | 01-02-2017 |
| | | JP 5748014 B1 | 15-07-2015 |
| | | JP 2015183144 A | 22-10-2015 |
| | | US 2017114234 A1 | 27-04-2017 |
| | | WO 2015147177 A1 | 01-10-2015 |
| JP 2014019751 A | 03-02-2014 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6861811 B
- JP 2012092330 A
- JP 2013237834 A
- JP 2009209353 A
- JP 2002012607 A
- JP 2002188025 A
- JP 2003026978 A
- JP 2003342503 A
- JP 2011225848 A
- JP 2009209352 A
- JP 54059936 A
- JP S5459936 A
- JP 2003306623 A
- JP 60132767 A
- JP S60132767 A


### Non-patent literature cited in the description


- Encyclopedia of Pigments. 2000
- **W. HERBST** ; **K. HUNGER**. *Industrial Organic Pigments*